# EUROPEAN PATENT APPLICATION

(11) **EP 4 102 920 A1**
(43) Date of publication of application: **14.12.2022**
(21) Application number: 20922810.5
(22) Date of filing: 06.03.2020
(51) Int. Cl.: H04W 72/10, H04W 72/04

(54) **COMMUNICATION METHOD AND RELATED APPARATUS**

(71) Applicant: HUAWEI TECHNOLOGIES CO., LTD., Shenzhen, Guangdong 518129 (CN)
(72) Inventor: XIAO, Xiao, Shenzhen, Guangdong 518129 (CN); LIU, Hang, Shenzhen, Guangdong 518129 (CN)
(74) Representative: Pfenning, Meinig & Partner mbB
(86) International application number: PCT/CN2020/078240
(87) International publication number: WO 2021/174536

(57) **Abstract**

Embodiments of this application provide a communication method and a related apparatus, and may be applied to the field of vehicle-mounted devices, and in particular, to short-distance communication in a cockpit domain. According to embodiments of this application, an electronic device obtains at least one of identity information and priority information of a first apparatus. After determining that a priority of the first apparatus is higher than a priority of a second apparatus, the electronic device obtains first resource configuration information, where a resource configured by using the first resource configuration information is allocated by the first apparatus, and may be used for communication between the first apparatus and a third apparatus, or may be used for communication between the first apparatus and the second apparatus. In this manner, a highest-priority device is determined by using priorities of devices, to coordinately allocate resources. The highest-priority device can manage and allocate communication resources in a centralized manner, to avoid interference and resource collision that are caused by communication between any two devices to communication between other devices.

## Description

### TECHNICAL FIELD

This application relates to the field of wireless communication, and in particular, to the field of short-distance communication, for example, a cockpit domain. This application provides a communication method and a related apparatus.

### BACKGROUND

A vehicle plays an increasingly important role in people's daily life. In the future, a vehicle is not only a transportation tool, but also a space for people's life. With continuous development of intelligent cockpit technologies, people can be provided with richer entertainment, audio, video, and office experience in an in-vehicle environment. Currently, connection devices used in an intelligent cockpit mainly include a head unit, a vehicle-mounted audio and video device (such as a speaker or a microphone), an intelligent terminal, for example, a mobile phone, and another intelligent wearable device (for example, a headset). The head unit is connected to the audio and video device in the vehicle mainly in a wired manner. The head unit is connected to the intelligent terminal mainly in a wireless manner, and the intelligent terminal is connected to the another wearable device mainly in a wireless manner, for example, Bluetooth.

When the head unit is connected to the intelligent terminal for communication, the head unit is a primary node, the intelligent terminal is a secondary node, and the primary node is responsible for allocating a resource to the secondary node. When the intelligent terminal communicates with the intelligent wearable device, the intelligent terminal is a primary node, and the intelligent wearable device is a secondary node. In a current technology, when a plurality of different primary nodes and secondary nodes simultaneously communicate with each other (different domains are formed), a conflict may exist between communication resources of a plurality of primary-secondary communication pairs, and severe interference exists. Consequently, communication performance and service performance are severely affected, and good user experience is absent.

Therefore, how to coordinate resource allocation between a plurality of primary nodes in short-distance space such as a cockpit to avoid resource collision and interference between a plurality of primary-secondary node pairs in communication is a problem that is being studied by persons skilled in the art.

Embodiments of this application disclose a communication method and a related apparatus, to manage and allocate communication resources in a centralized manner, and avoid interference and resource collision that are caused by communication between any two devices to communication between other devices.

A first aspect of embodiments of this application discloses a communication method, where the communication method includes:
obtaining at least one of identity information and priority information of a first apparatus, where the identity information of the first apparatus indicates that the first apparatus has a resource allocation function;
determining that a priority indicated by the priority information of the first apparatus is higher than a priority of a second apparatus; and
obtaining first resource configuration information, where the first resource configuration information is used to configure a first resource, and the first resource is used for communication between the first apparatus and a third apparatus; or the first resource configuration information is used to configure a second resource, and the second resource is used for communication between the first apparatus and the second apparatus.

According to the method provided in this embodiment of this application, an electronic device obtains at least one of the identity information and the priority information of the first apparatus. After determining that a priority of the first apparatus is higher than a priority of a second apparatus, the electronic device obtains first resource configuration information, where a resource configured by using the first resource configuration information is allocated by the first apparatus, and may be used for communication between the first apparatus and a third apparatus, or may be used for communication between the first apparatus and the second apparatus. For example, the electronic device (an execution body) in this embodiment of this application may be the second apparatus or the third apparatus, and a highest-priority device (the first apparatus) is determined by using priorities of devices, to coordinately allocate resources. When the execution body is the second apparatus, the second apparatus obtains the first resource configuration information. The first resource configuration is used for communication between the first apparatus and the second apparatus, and may be further used for communication between the first apparatus and the third apparatus. When the execution body is the third apparatus, the third apparatus obtains the first resource configuration information. The first resource configuration is used to configure communication between the first apparatus and the third apparatus. In other words, the highest-priority device can manage and allocate communication resources in a centralized manner, to avoid interference and resource collision that are caused by communication between any two devices to communication between other devices.

In a possible implementation, the priority information is used to indicate a resource allocation priority. A low-priority device is subject to resource allocation performed by a high-priority device. The highest-priority device allocates resources in a centralized manner, to avoid interference and resource collision that are caused by communication between any two devices to communication between other devices.

In a possible implementation, the identity information indicates a resource allocation priority of the first apparatus. In this implementation, when obtaining the identity information of the first apparatus, the electronic device may determine the resource allocation priority of the first apparatus based on the identity information, to determine a highest-priority device to coordinately allocate resources. The highest-priority device can manage and allocate communication resources in a centralized manner, to avoid interference and resource collision that are caused by communication between any two devices to communication between other devices.

In a possible implementation, the method further includes: stopping sending a broadcast message, where the broadcast message includes at least one of identity information and priority information of the second apparatus. In this implementation, after determining that the priority of the first apparatus is higher than that of the second apparatus, the electronic device stops sending the broadcast message. In other words, the electronic device stops connecting to another device and obeys resource allocation performed by the first apparatus. In this way, that the highest-priority device (the first apparatus) can manage and allocate communication resources in a centralized manner is implemented, to avoid interference and resource collision that are caused by communication between any two devices to communication between other devices.

In a possible implementation, the method further includes: sending first information to the third apparatus, where the first information is used to indicate that the second apparatus no longer allocates a resource to the third apparatus; or the first information is used to indicate a change in a resource obtaining mode of the third apparatus. In this manner, when the electronic device is the second apparatus, the first information is sent to the third apparatus, to indicate to the third apparatus that a higher-priority device (the first apparatus) exists. In this case, the third apparatus no longer obtains resource allocation information from the second apparatus. The third apparatus may change a mode of obtaining resource allocation information, and obtain resource allocation information from the first apparatus. In this way, that the highest-priority device (the first apparatus) can manage and allocate communication resources in a centralized manner is implemented, to avoid interference and resource collision that are caused by communication between any two devices to communication between other devices.

In a possible implementation, a broadcast message from the second apparatus does not include the identity information or the priority information of the second apparatus; or the first information is used to indicate to terminate resource allocation to the third apparatus. In this manner, when the electronic device is the second apparatus, the first information may be used to indicate that the second apparatus no longer allocates a resource to the third apparatus. Alternatively, the broadcast message sent by the second apparatus no longer includes the identity information and the priority information of the second apparatus. In other words, the second apparatus stops connecting to another device, and obeys resource allocation performed by the first apparatus. In this way, that the highest-priority device (the first apparatus) can manage and allocate communication resources in a centralized manner is implemented, to avoid interference and resource collision that are caused by communication between any two devices to communication between other devices.

In a possible implementation, the first information includes at least one of the identity information and the priority information of the first apparatus; and/or the first information carries a mode change indication, and the mode change indication is used to indicate the third apparatus to obtain resource allocation information from the first apparatus. In this manner, the first information may indicate the identity information and the priority information of the first apparatus to the third apparatus, to indicate the third apparatus to receive resource allocation from the first apparatus.

In a possible implementation, the obtaining first resource configuration information includes: receiving the first resource configuration information from the first apparatus. In this manner, the first resource configuration information may come from the first apparatus. In this way, that the highest-priority device can manage and allocate communication resources in a centralized manner is implemented, to avoid interference and resource collision that are caused by communication between any two devices to communication between other devices.

In a possible implementation, the method further includes: sending second resource configuration information to the third apparatus, where a resource configured by using the second resource configuration information is a part of the second resource; or sending the first resource configuration information to the third apparatus. In this manner, the electronic device sends the second resource configuration information to the third apparatus, where a resource configured by using the second resource configuration information is a part of a resource configured by using the first resource configuration information. For example, after receiving the first resource configuration information, the second apparatus may configure a resource of the second apparatus based on the first resource configuration information. In addition, the second apparatus sends the second resource configuration information in the first resource configuration information to the third apparatus, and the third apparatus configures a resource of the third apparatus based on the second resource configuration information. Alternatively, the second apparatus directly sends the first resource configuration information to the third apparatus, where the first resource configuration information comes from the first apparatus, and is sent by the second apparatus to the third apparatus. The second apparatus is used to perform resource relay, and the highest-priority device does not need to establish a connection to each device, so that a technical effect of performing unified resource allocation on a plurality of devices can be achieved, and resource management is facilitated.

In a possible implementation, the method further includes: sending second information to the second apparatus, where the second information is used to indicate to release a connection to the second apparatus. In this implementation, when the electronic device is the third apparatus, the third apparatus sends the second information to the second apparatus, to indicate to the second apparatus that a higher-priority device (the first apparatus) exists. In this case, the third apparatus releases a connection resource between the third apparatus and the second apparatus, and the second apparatus stops allocating a resource to the third apparatus. In this way, that the highest-priority device (the first apparatus) can manage and allocate communication resources in a centralized manner is implemented, to avoid interference and resource collision that are caused by communication between any two devices to communication between other devices.

In a possible implementation, the obtaining first resource configuration information includes: obtaining the first resource configuration information from the first apparatus, where the first resource configuration information is used to configure the first resource, and the first resource is used for communication between the first apparatus and the third apparatus. In this implementation, the first resource configuration information of the third apparatus may come from the first apparatus. Optionally, when the electronic device (an executable body) is the third apparatus, the first resource configuration information may be forwarded by the second apparatus. The second apparatus receives the resource configuration information from the first apparatus, and then sends the resource configuration information to the third apparatus. In this way, that the highest-priority device can manage and allocate communication resources in a centralized manner is implemented, to avoid interference and resource collision that are caused by communication between any two devices to communication between other devices.

In a possible implementation, the method further includes: receiving first information from the second apparatus, where the first information is used to indicate that the second apparatus no longer allocates a resource to the third apparatus; or the second information is used to indicate a change in a resource obtaining mode of the third apparatus. In this implementation, when the electronic device is the third apparatus, the first information sent by the second apparatus is received, and the first information indicates to the third apparatus that a higher-priority device (the first apparatus) exists. In this case, the third apparatus no longer obtains resource allocation information from the second apparatus. The third apparatus changes a mode of obtaining resource allocation information, and may obtain resource allocation information from the first apparatus. In this way, that the highest-priority device (the first apparatus) can manage and allocate communication resources in a centralized manner is implemented, to avoid interference and resource collision that are caused by communication between any two devices to communication between other devices.

A second aspect of embodiments of this application discloses a communication method, where the communication method includes:
sending third information, where the third information includes at least one of identity information of a first apparatus, a first address, and priority information of the first apparatus, and the identity information of the first apparatus indicates that the first apparatus has a resource allocation function; and
receiving a response message from a second apparatus, where the response message includes identification information of the second apparatus.

This embodiment of this application provides a method for establishing a connection between devices for communication. The first apparatus and the second apparatus are used as examples. The first apparatus actively initiates a connection, and sends the third information. The third information may indicate the priority information of the first apparatus, and a low-priority apparatus obeys resource allocation performed by a high-priority apparatus. The second apparatus sends response information to the first apparatus based on the received third information, and establishes a connection to the first apparatus. In this connection manner, connection communication is established based on priority information of devices, so that when a communication pair accesses a complex environment (there are a plurality of communication pairs), a highest-priority device is determined based on the priority information of the devices, to allocate resources in a centralized manner and resolve a problem of mutual interference between the plurality of communication pairs.

In a possible implementation, the priority information is used to indicate a resource allocation priority. A low-priority device is subject to resource allocation performed by a high-priority device. The highest-priority device allocates resources in a centralized manner, to avoid interference and resource collision that are caused by communication between any two devices to communication between other devices.

In a possible implementation, the method further includes: sending a connection establishment message to the second apparatus, where the connection establishment message includes a second address, and the second address is an address allocated by the first apparatus to the second apparatus. In this manner, the first apparatus sends the second address to the second apparatus, where the second address is a short address. In a process in which the first apparatus communicates with the second apparatus, a signaling length can be reduced, and resources can be saved.

A third aspect of embodiments of this application discloses a communication method, where the communication method includes:
receiving a connection establishment message, where the connection establishment message includes identification information of a second apparatus; and
sending fourth information based on the connection establishment message, where the fourth information includes at least one of identity information of a first apparatus, a first address, and priority information of the first apparatus, and the identity information of the first apparatus indicates that the first apparatus has a resource allocation function.

This embodiment of this application provides a method for establishing a connection between devices for communication. The first apparatus and the second apparatus are used as examples. The second apparatus actively initiates a connection. After receiving a connection establishment message from the second apparatus, the first apparatus sends fourth information to establish the connection to the second apparatus. The fourth information may indicate the priority information of the first apparatus, and a low-priority apparatus obeys resource allocation performed by a high-priority apparatus. In this connection manner, connection communication is established based on priority information of devices, so that when a communication pair accesses a complex environment (there are a plurality of communication pairs), a highest-priority device is determined based on the priority information of the devices, to allocate resources in a centralized manner and resolve a problem of mutual interference between the plurality of communication pairs.

In a possible implementation, the priority information is used to indicate a resource allocation priority. A low-priority device is subject to resource allocation performed by a high-priority device. The highest-priority device allocates resources in a centralized manner, to avoid interference and resource collision that are caused by communication between any two devices to communication between other devices.

In a possible implementation, the fourth information further includes a second address, and the second address is an address allocated by the first apparatus to the second apparatus. In this manner, the fourth information may further include the second address, where the second address is a short address. In a process in which the first apparatus communicates with the second apparatus, a signaling length can be reduced, and resources can be saved.

A fourth aspect of embodiments of this application discloses a communication apparatus, where the communication apparatus includes:
an obtaining unit, configured to obtain at least one of identity information and priority information of a first apparatus, where the identity information of the first apparatus indicates that the first apparatus has a resource allocation function; and
a determining unit, configured to determine that a priority indicated by the priority information of the first apparatus is higher than a priority of a second apparatus; where
the obtaining unit is further configured to obtain first resource configuration information, where the first resource configuration information is used to configure a first resource, and the first resource is used for communication between the first apparatus and a third apparatus; or the first resource configuration information is used to configure a second resource, and the second resource is used for communication between the first apparatus and the second apparatus.

In a possible implementation, the priority information is used to indicate a resource allocation priority. A low-priority device is subject to resource allocation performed by a high-priority device. The highest-priority device allocates resources in a centralized manner, to avoid interference and resource collision that are caused by communication between any two devices to communication between other devices.

In a possible implementation, the identity information indicates a resource allocation priority of the first apparatus.

In a possible implementation, the apparatus further includes: a stopping unit, configured to stop sending a broadcast message, where the broadcast message includes at least one of identity information and priority information of the second apparatus.

In a possible implementation, the apparatus further includes: a first sending unit, configured to send first information to the third apparatus, where the first information is used to indicate that the second apparatus no longer allocates a resource to the third apparatus; or the first information is used to indicate a change in a resource obtaining mode of the third apparatus.

In a possible implementation, a broadcast message from the second apparatus does not include the identity information or the priority information of the second apparatus; or the first information is used to indicate to terminate resource allocation to the third apparatus.

In a possible implementation, the first information includes at least one of the identity information and the priority information of the first apparatus; and/or the first information carries a mode change indication, and the mode change indication is used to indicate the third apparatus to obtain resource allocation information from the first apparatus.

In a possible implementation, the obtaining unit is specifically configured to receive the first resource configuration information from the first apparatus.

In a possible implementation, the first sending unit is further configured to: send second resource configuration information to the third apparatus, where a resource configured by using the second resource configuration information is a part of the second resource; or send the first resource configuration information to the third apparatus.

In a possible implementation, the apparatus further includes: a second sending unit, configured to send second information to the second apparatus, where the second information is used to indicate to release a connection to the second apparatus.

In a possible implementation, the obtaining unit is specifically configured to obtain the first resource configuration information from the first apparatus.

In a possible implementation, the apparatus further includes: a first receiving unit, configured to receive first information from the second apparatus, where the first information is used to indicate that the second apparatus no longer allocates a resource to the third apparatus; or the second information is used to indicate a change in a resource obtaining mode of the third apparatus.

In a possible implementation, the first apparatus includes but is not limited to a head unit; the second apparatus includes but is not limited to a mobile phone, a tablet, a vehicle-mounted microphone, a vehicle-mounted speaker, or the like; and the third apparatus includes but is not limited to a headset, a wearable device, or the like.

It may be understood that for beneficial effects of the fourth aspect provided above, refer to the beneficial effects of the communication method provided in the first aspect. Details are not described herein again.

A fifth aspect of embodiments of this application discloses a communication apparatus, where the communication apparatus includes:
a third sending unit, configured to send third information, where the third information includes at least one of identity information of a first apparatus, a first address, and priority information of the first apparatus, and the identity information of the first apparatus indicates that the first apparatus has a resource allocation function; and
a second receiving unit, configured to receive a response message from a second apparatus, where the response message includes identification information of the second apparatus.

In a possible implementation, the priority information is used to indicate a resource allocation priority. A low-priority device is subject to resource allocation performed by a high-priority device. The highest-priority device allocates resources in a centralized manner, to avoid interference and resource collision that are caused by communication between any two devices to communication between other devices.

In a possible implementation, the third sending unit is further configured to send a connection establishment message to the second apparatus, where the connection establishment message includes a second address, and the second address is an address allocated by the first apparatus to the second apparatus.

In a possible implementation, the first apparatus includes but is not limited to a mobile phone, a tablet, a vehicle-mounted microphone, a vehicle-mounted speaker, or the like; and the second apparatus includes but is not limited to a headset, a wearable device, or the like. Alternatively, the first apparatus includes but is not limited to a head unit; and the second apparatus includes but is not limited to a mobile phone, a tablet, a vehicle-mounted microphone, a vehicle-mounted speaker, a headset, a wearable device, or the like.

It may be understood that for beneficial effects of the fifth aspect provided above, refer to the beneficial effects of the communication method provided in the second aspect. Details are not described herein again.

A sixth aspect of embodiments of this application discloses a communication apparatus, where the communication apparatus includes:
a third receiving unit, configured to receive a connection establishment message, where the connection establishment message includes identification information of a second apparatus; and
a fourth sending unit, configured to send fourth information based on the connection establishment message, where the fourth information includes at least one of identity information of a first apparatus, a first address, and priority information of the first apparatus, and the identity information of the first apparatus indicates that the first apparatus has a resource allocation function.

In a possible implementation, the priority information is used to indicate a resource allocation priority. A low-priority device is subject to resource allocation performed by a high-priority device. The highest-priority device allocates resources in a centralized manner, to avoid interference and resource collision that are caused by communication between any two devices to communication between other devices.

In a possible implementation, the fourth information further includes a second address, and the second address is an address allocated by the first apparatus to the second apparatus.

In a possible implementation, the first apparatus includes but is not limited to a mobile phone, a tablet, a vehicle-mounted microphone, a vehicle-mounted speaker, or the like; and the second apparatus includes but is not limited to a headset, a wearable device, or the like. Alternatively, the first apparatus includes but is not limited to a head unit; and the second apparatus includes but is not limited to a mobile phone, a tablet, a vehicle-mounted microphone, a vehicle-mounted speaker, a headset, a wearable device, or the like.

It may be understood that for beneficial effects of the sixth aspect provided above, refer to the beneficial effects of the communication method provided in the third aspect. Details are not described herein again.

A seventh aspect of embodiments of this application discloses an apparatus. The apparatus includes at least one processor, and the processor is configured to support an electronic device in implementing a corresponding function in the communication method provided in the first aspect, the second aspect, or the third aspect. The apparatus may further include a memory. The memory is configured to be coupled to the processor, and the memory stores program instructions and data that are necessary for the electronic device. The apparatus may further include at least one communication interface, configured to provide information input and/or output for the at least one processor. Further, the apparatus may be a chip or an integrated circuit inside the electronic device. Alternatively, the apparatus may be the electronic device. When the apparatus is the electronic device, the communication interface may further provide information input and/or output for the electronic device.

An eighth aspect of embodiments of this application discloses a computer-readable storage medium, including computer instructions. When the computer instructions are run on an electronic device, the electronic device is enabled to perform the communication method provided in any one implementation of the first aspect, the second aspect, or the third aspect of embodiments of this application.

A ninth aspect of embodiments of this application discloses a computer program product. When the computer program product is run on an electronic device, the electronic device is enabled to perform the communication method provided in any one implementation of the first aspect, the second aspect, or the third aspect of embodiments of this application.

A tenth aspect of embodiments of this application discloses a chip. The chip includes a processor, configured to support a network device in implementing a function in the first aspect, the second aspect, or the third aspect, for example, generating or processing information in the foregoing communication method. In a possible design, the chip further includes a memory, and the memory is configured to store program instructions and data that are necessary for a data sending device. The chip system may include a chip, or may include a chip and another discrete component.

It may be understood that for beneficial effects of the seventh aspect, the eighth aspect, the ninth aspect, and the tenth aspect provided above, refer to the beneficial effects of the communication method provided in the first aspect, the second aspect, or the third aspect. Details are not described herein again.

### BRIEF DESCRIPTION OF DRAWINGS

FIG. 1 is an application scenario of a communication method according to an embodiment of this application;
FIG. 2 is a schematic flowchart of a communication method according to an embodiment of this application;
FIG. 3 is a schematic flowchart of another communication method according to an embodiment of this application;
FIG. 4 is a schematic flowchart of another communication method according to an embodiment of this application;
FIG. 5 is a schematic flowchart of another communication method according to an embodiment of this application;
FIG. 6 is a schematic flowchart of another communication method according to an embodiment of this application;
FIG. 7 is a schematic diagram of a structure of a communication apparatus according to an embodiment of this application;
FIG. 8 is a schematic diagram of a structure of another communication apparatus according to an embodiment of this application;
FIG. 9 is a schematic diagram of a structure of another communication apparatus according to an embodiment of this application;
FIG. 10 is a schematic diagram of a structure of an electronic device according to an embodiment of this application; and
FIG. 11 is a schematic diagram of a structure of a chip according to an embodiment of this application.

### DESCRIPTION OF EMBODIMENTS

The following describes embodiments of this application with reference to the accompanying drawings in embodiments of this application.

In the specification, claims, and accompanying drawings of this application, the terms "first", "second", "third", "fourth", and the like are intended to distinguish between different objects but do not indicate a particular order. In addition, the terms "include", "have", and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another step or unit inherent to the process, the method, the product, or the device.

"Embodiment" mentioned in this specification means that a particular feature, structure, or characteristic described with reference to the embodiment may be included in at least one embodiment of this application. The phrase appearing at different locations in this specification does not necessarily refer to a same embodiment, and is not an independent or alternative embodiment exclusive of another embodiment. It is explicitly and implicitly understood by a person skilled in the art that the embodiments described in this specification may be combined with another embodiment.

Terms such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both an application that runs on a computing device and the computing device may be components. One or more components may reside within a process and/or an execution thread, and a component may be located on one computer and/or distributed between two or more computers. In addition, these components may be executed from various computer-readable media that store various data structures. The components may communicate by using a local and/or remote process and based on, for example, a signal having one or more data packets (for example, data from two components interacting with another component in a local system, a distributed system, and/or a network such as the Internet interacting with another system by using the signal).

An electronic device in embodiments of this application may be a vehicle-mounted device such as a head unit, a vehicle-mounted speaker, or a vehicle-mounted microphone, a mobile phone, a tablet computer, a desktop, a laptop, a notebook computer, an ultra-mobile personal computer (Ultra-mobile Personal Computer, UMPC), a handheld computer, a netbook, a personal digital assistant (Personal Digital Assistant, PDA), a wearable electronic device, a virtual reality device, or the like.

First, some terms in this application are explained and described, to facilitate understanding of a person skilled in the art.
(1) CDC refers to control domain cockpit, that is, a cockpit domain controller, or refers to a head unit in this application. In addition to conventional radio, music and video playing, and navigation functions, the head unit has a cellular communication function (3G, 4G, and the like) and Telematics. The head unit can work with an automobile CAN-BUS technology to implement information communication between a person and a vehicle and between a vehicle and the outside world, so that user experience and functions related to a service and security are enhanced.
(2) A primary node and a secondary node refer to two types of nodes distinguished based on logical functions. The primary node manages the secondary node and has a resource allocation function. The primary node is responsible for allocating a resource to the secondary node. The secondary node obeys scheduling performed by the primary node and uses the resource allocated by the primary node to communicate with the primary node. It should be noted that an attribute feature of a node may change. For example, when an intelligent terminal communicates with a headset, the intelligent terminal is a primary node, and the headset is a secondary node. However, when the intelligent terminal accesses a device (for example, a CDC) with a higher priority and obeys scheduling performed by the CDC, a role attribute of the intelligent terminal is changed to a secondary node.
(3) A primary-secondary communication pair includes a primary node device and a secondary node device. Two devices are connected to each other to form a primary-secondary communication pair.

In addition, to facilitate understanding of embodiments of this application, the following specifically analyzes technical problems that need to be resolved in embodiments of this application and corresponding application scenarios.

Currently, connection devices used in an intelligent cockpit mainly include a head unit (CDC), a vehicle-mounted audio and video device (such as a speaker or a microphone), an intelligent terminal, for example, a mobile phone, another intelligent wearable device (for example, a headset), and the like. The head unit is connected to the vehicle-mounted audio and video device mainly in a wired manner. The head unit CDC is connected to the intelligent terminal mainly in a wireless manner, and the intelligent terminal is connected to the another wearable device mainly in a wireless manner, for example, Bluetooth.

When the CDC is connected to a first intelligent terminal for communication, the CDC is a primary node, the first intelligent terminal is a secondary node, and the primary node is responsible for allocating a resource to the secondary node. In this case, another intelligent terminal (for example, a second intelligent terminal) may exist in a cockpit environment, and the second intelligent terminal may be communicating with an intelligent wearable device (for example, a headset). In this case, the second intelligent terminal is a primary node, and the intelligent wearable device connected to the second intelligent terminal is a secondary node. Similarly, the primary node allocates a resource to the secondary node. In this case, there are two primary-secondary communication pairs performing independent communication in a cockpit. When a plurality of different primary nodes and secondary nodes simultaneously communicate with each other (different domains are formed), a conflict may exist between communication resources of a plurality of primary-secondary communication pairs. When a time-frequency resource conflict occurs between different primary-secondary communication pairs, a severe interference problem is caused. Consequently, communication performance and service performance are affected, and good user experience is absent.

Therefore, for the foregoing technical problem, a main problem to be resolved in this application is how to coordinate resource allocation between a plurality of primary nodes in short-distance space such as a cockpit, to avoid resource collision and interference between a plurality of primary-secondary node pairs, and ensure user experience. In this application, a connection is established based on device priority information, so that a high-priority device can schedule and control resources in a centralized manner. For example, resources in a cockpit are all managed and allocated by a CDC. According to this method, interference and a resource collision that are caused by communication between any two devices to communication between other devices can be avoided.

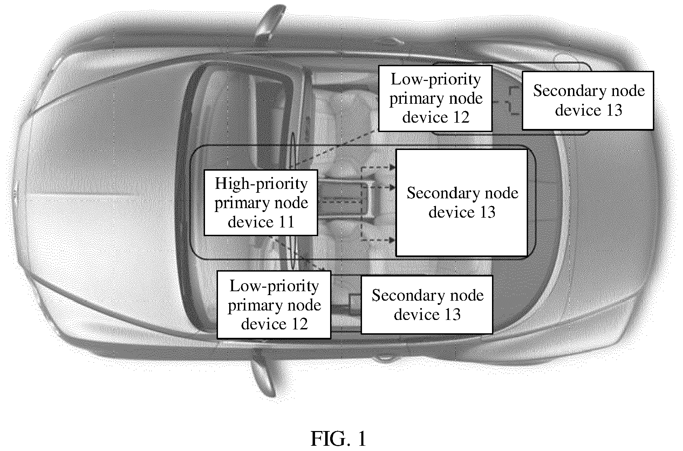

For the technical problems that occur in the foregoing solution, the following lists an example of a scenario to which a communication method in this application is applied. FIG. 1 shows an application scenario in an embodiment of this application. The application scenario may be in an intelligent cockpit, and may include a high-priority primary node device 11, a low-priority primary node device 12, and a secondary node device 13. The high-priority primary node device 11, the low-priority primary node device 12, and the secondary node device 13 communicate in a wireless connection manner (for example, Bluetooth).

The high-priority primary node device 11, the low-priority primary node device 12, and the secondary node device 13 are all electronic devices, may be static or mobile, and may be network devices or terminal devices.

The network device includes various forms of network devices such as a server, a macro base station, a micro base station (or referred to as a small cell), a relay station, and an access point. The server may include but is not limited to a cloud server, a background server, a component server, a data processing server, and the like. The server may communicate with a plurality of terminals by using the Internet. A corresponding server-side program needs to run on the server to provide a corresponding service, such as a database service, data calculation, or decision execution.

The terminal device includes a device that is located at a periphery of a computer network, such as a communication terminal, a vehicle-mounted device, a mobile device, a user terminal, a mobile terminal, a wireless communication device, a portable terminal, a user agent, a user apparatus, a service device, or user equipment (User Equipment, UE), and is mainly configured to input data, output or display a processing result, or the like. The terminal may alternatively be a software client, an application, or the like that is installed on or runs on any one of the foregoing devices. For example, the terminal may be a mobile phone, a cordless phone, a smart watch, a wearable device, a tablet device, a handheld device that has a wireless communication function, a computing device, a vehicle-mounted communication module, a smart meter, or another processing device connected to a wireless modem.

For the application scenario of the intelligent cockpit, the high-priority primary node device 11 may be a head unit CDC; the low-priority primary node device 12 may be a vehicle-mounted device such as a mobile phone, a tablet, a vehicle-mounted microphone, or a vehicle-mounted speaker; and the secondary node device 13 may be a headset, a wearable device, or the like. A connection is established between different devices based on priority information of the devices, so that a high-priority device can schedule and control resources in a centralized manner, and mutual interference between a plurality of primary-secondary communication pairs is effectively reduced.

Based on the foregoing technical problems and application scenario, an embodiment of this application provides a communication method. For example, a first apparatus is used as a high-priority primary node, a second apparatus is used as a low-priority primary node, and a third apparatus is used as a secondary node. The third apparatus successfully establishes a connection to the second apparatus, and the second apparatus and the third apparatus are a primary-secondary communication pair. The following uses three specific embodiments to describe in detail how the first apparatus, the second apparatus, and the third apparatus perform connection update and resource allocation when the second apparatus and the third apparatus enter a communication range of the first apparatus.

Embodiment 1: A low-priority primary node (the second apparatus, for example, a mobile phone) determines a priority, stops a resource allocation function of the low-priority primary node, and obeys resource allocation performed by a high-priority primary node (the first apparatus, for example, a head unit).

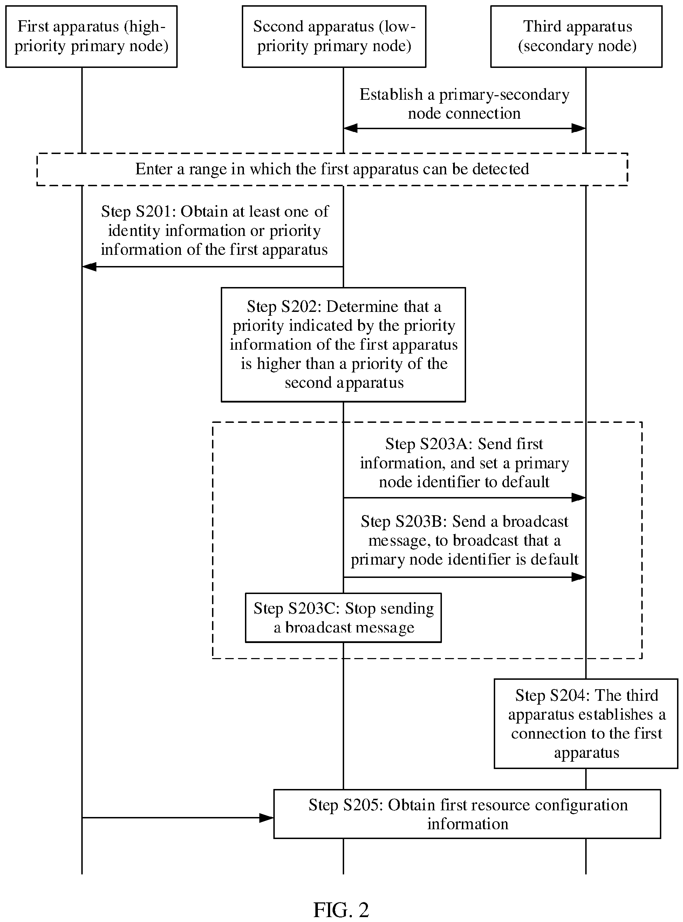

For a specific process description, refer to FIG. 2.

Step S201: Obtain at least one of identity information and priority information of the first apparatus.

Specifically, the first apparatus sends at least one of the identity information and the priority information of the first apparatus, and when the second apparatus enters a communication range of the first apparatus, the second apparatus obtains at least one of the identity information and the priority information of the first apparatus. The identity information of the first apparatus indicates that the first apparatus has a resource allocation function. In other words, the first apparatus may be used as a primary node. The identity information may indicate a device type (for example, a head unit, a mobile phone, or a portable terminal), or the identity information is an identifier that can identify the first apparatus as a primary node. It may be understood that resource allocation may alternatively be referred to as resource management or resource scheduling.

At least one of the identity information and the priority information of the first apparatus may be included in a broadcast message (for example, a system broadcast message) sent by the first apparatus, or may be included in radio resource control (Radio Resource Control, RRC) signaling. Alternatively, at least one of the identity information and the priority information of the first apparatus may be sent in a broadcast manner, or may be sent in a unicast or multicast manner.

Alternatively, at least one of the identity information and the priority information of the first apparatus may be carried in a physical signal sent by the first apparatus. For example, the physical signal may be a primary synchronization signal, different priority information may correspond to synchronization signals of different styles or patterns, and another apparatus may obtain or determine the priority information of the first apparatus by receiving a synchronization signal. It may alternatively be understood as the following: The priority information corresponds to a style or a pattern of the physical signal. In other words, the priority information is indicated by using a style or a pattern of the physical signal.

For example, the identity information may be indicated by using device identification code. Generally, the device identification code encodes a device according to a specific encoding rule. Different fields in the device identification code have different meanings, and the identity information of the device may be obtained by parsing some or all of the fields. For example, two bits in the device identification code may be used to indicate a device type. For example, 00 identifies a CDC, 01 identifies a mobile phone, and 10 indicates a wearable device. For another example, the identity information may alternatively be indicated by using one bit. In other words, 0 identifies a primary node (which has a resource allocation/scheduling function), and 1 identifies a secondary node (which only obeys scheduling of the primary node).

Optionally, the identity information may be indicated by using a media access layer address (Media Access Control Address, MAC address). This is similar to the case of the device identification code. Details are not described again.

Optionally, the priority information is used to indicate a resource allocation priority. A low-priority device is subject to resource allocation performed by a high-priority device. Alternatively, the priority information may be embodied as an access priority or a connection priority. In other words, another apparatus preferentially establishes a connection to a high-priority device, or initiates access to a high-priority device, and the high-priority device allocates resources in a centralized manner. For example, when facing connection requests sent by a plurality of devices, the another apparatus establishes a connection to a highest-priority device in the plurality of devices; or when the another apparatus initiates a connection request to the plurality of devices, a highest-priority device in the plurality of devices responds to the connection request to establish a connection. Alternatively, the another apparatus initiates a connection request to a highest-priority device in the plurality of devices.

Specifically, the priority information may be a level identifier, and indicate a priority of the first apparatus that serves as a primary node. For example, a CDC sends a first system broadcast message, where the message carries a first access priority indicator 000 (a high access priority); and a mobile phone sends a second system broadcast message, where the message carries a second access priority indicator 001 (a low access priority). In this case, another apparatus preferentially sends a connection establishment/access request to the CDC, and the CDC schedules resources for the another apparatus. In addition, the priority information may be agreed on according to a protocol. For example, in the protocol, it may be agreed on that a CDC device has a highest priority, the mobile phone has a low priority, and the like.

In a possible implementation, before the second apparatus obtains at least one of the identity information and the priority information of the first apparatus, the second apparatus first sends a connection request message in a broadcast manner. When the first apparatus enters a communication range of the second apparatus, the first apparatus responds to the connection request message sent by the second apparatus, and sends response information to the second apparatus, where the response information includes at least one of the identity information and the priority information of the first apparatus. The second apparatus obtains at least one of the identity information and the priority information of the first apparatus.

Specifically, the second apparatus may obtain at least one of the identity information and the priority information of the first apparatus by receiving a system broadcast message sent by the first apparatus.

In a possible implementation, the identity information may indicate a resource allocation priority. When obtaining the identity information of the first apparatus, the second apparatus may determine the resource allocation priority of the first apparatus based on the identity information. An apparatus preferentially applies, for a resource, to a device that has a higher resource allocation priority, and the device that has a higher resource allocation priority allocates and manages resources in a centralized manner.

Optionally, the identity information of the first apparatus may be priority information of a first device. In other words, when obtaining the identity information of the first apparatus, the second apparatus may determine a priority of the first apparatus based on the identity information, to determine whether to send a connection establishment request to the first apparatus, and whether to allow the first apparatus to schedule a resource for the second apparatus.

Step S202: Determine that a priority indicated by the priority information of the first apparatus is higher than a priority of the second apparatus.

Specifically, after obtaining at least one of the identity information and the priority information of the first apparatus, the second apparatus determines that the priority indicated by the priority information of the first apparatus is higher than the priority of the second apparatus.

Step S203A: Send a first message, and set a primary node identifier to default.

Specifically, after determining that the priority indicated by the priority information of the first apparatus is higher than the priority of the second apparatus, the second apparatus sets identity information (indicating that the second apparatus has a resource allocation function) of the second apparatus to default. In other words, the second apparatus no longer serves as a primary node to allocate a resource to another apparatus, and the second apparatus obeys resource allocation performed by the first apparatus. Because the second apparatus and the third apparatus are a primary-secondary communication pair, the second apparatus sends the first message to the third apparatus. The first information is used to indicate that the second apparatus no longer allocates a resource to the third apparatus. In other words, the second apparatus no longer serves as a primary node of the third apparatus.

Optionally, the first information may include at least one of the identity information and the priority information of the first apparatus, and the first information carries a mode change indication to indicate a change in a resource obtaining mode of the third apparatus. Based on at least one of the identity information and the priority information of the first apparatus in the first information, the first information indicates the third apparatus to obey resource allocation performed by the first apparatus and to obtain resource allocation information from the first apparatus.

Step S203B: The second apparatus sends a broadcast message, to broadcast that a primary node identifier is default.

Specifically, after determining that the priority indicated by the priority information of the first apparatus is higher than the priority of the second apparatus, the second apparatus sets identity information (indicating that the second apparatus has a resource allocation function) of the second apparatus to default. In other words, the second apparatus no longer serves as a primary node to allocate a resource to another apparatus, and the second apparatus obeys resource allocation performed by the first apparatus. In addition, the second apparatus sends the broadcast message, where the broadcast message is used to broadcast, to another device, that the primary node identity of the second apparatus is default. After receiving the broadcast message, the third apparatus no longer obeys resource allocation performed by the second apparatus.

Optionally, the broadcast message from the second apparatus does not include the identity information or priority information of the second apparatus. In other words, the second apparatus temporarily cannot serve as a primary node to connect to another device.

Step S203C: The second apparatus stops sending a broadcast message.

Specifically, after determining that the priority indicated by the priority information of the first apparatus is higher than the priority of the second apparatus, the second apparatus stops sending a broadcast message, and the second apparatus obeys resource allocation performed by the first apparatus. When the third apparatus cannot obtain the broadcast message from the second apparatus, the third apparatus automatically disconnects from the third apparatus, and does not obey resource allocation performed by the second apparatus.

It should be noted that steps S203A, S203B, and S203C are all optional steps, and an execution sequence is not limited.

Step S204: The third apparatus establishes a connection to the first apparatus.

Specifically, the third apparatus establishes a connection to the first apparatus, obeys resource allocation performed by the first apparatus, and obtains resource allocation information from the first apparatus.

Optionally, the third apparatus releases the connection to the second apparatus, and releases the resource allocated by the second apparatus.

Step S205: Obtain first resource configuration information.

Specifically, the second apparatus obtains the first resource configuration information from the first apparatus, where the first resource configuration information is used to configure a second resource, and the second resource is used for communication between the first apparatus and the second apparatus. The third apparatus obtains the first resource configuration information from the first apparatus, where the first resource configuration information is used to configure a first resource, and the first resource is used for communication between the first apparatus and the third apparatus. In other words, the second apparatus and the third apparatus each directly obtain the resource allocation information from the first apparatus. Communication data between the second apparatus and the third apparatus may be forwarded by the first apparatus, to complete data transmission.

It may be understood that, before the second apparatus obtains the first resource configuration information, the method further includes that the second apparatus successfully establishes a connection to the first apparatus.

In general, a core idea of Embodiment 1 is that, within a specified range, only a highest-priority primary node is allowed to declare a primary node identity; and after identifying a higher-priority primary node (the first apparatus), a lower-priority primary node (the second apparatus) stops the resource allocation function of the lower-priority primary node, and notifies a secondary node device (the third apparatus) connected to the lower-priority primary node. Subsequently, both the lower-priority primary node and the secondary node obey resource allocation performed by the higher-priority primary node.

It may be understood that, when the secondary node (the third apparatus) and the low-priority primary node (the second apparatus) are moved out of a communication coverage area of the high-priority primary node (the first apparatus), the low-priority primary node (the second apparatus) cannot detect a higher-priority primary node. In this case, the low-priority primary node restores to a primary node identity, and the third apparatus continues to obey resource allocation performed by the second apparatus.

It should be noted that whether a node is within a communication range may depend on whether a received signal power is greater than a preset power threshold. When the received signal power is greater than the preset power threshold, it is considered that the node is within the communication range; or when the received signal power is not greater than the preset power threshold, it is considered that the node is not within the communication range.

Optionally, whether a node is within a communication range may alternatively depend on whether a communication rate is greater than a rate threshold. A principle is similar to that of the signal power. Details are not described herein again.

Embodiment 2: A low-priority primary node (the second apparatus, for example, a mobile phone) determines a priority, stops a resource allocation function of the low-priority primary node, obeys resource allocation performed by a high-priority primary node (the first apparatus, for example, a head unit), and forwards a resource of the secondary node (the third apparatus) to the third apparatus.

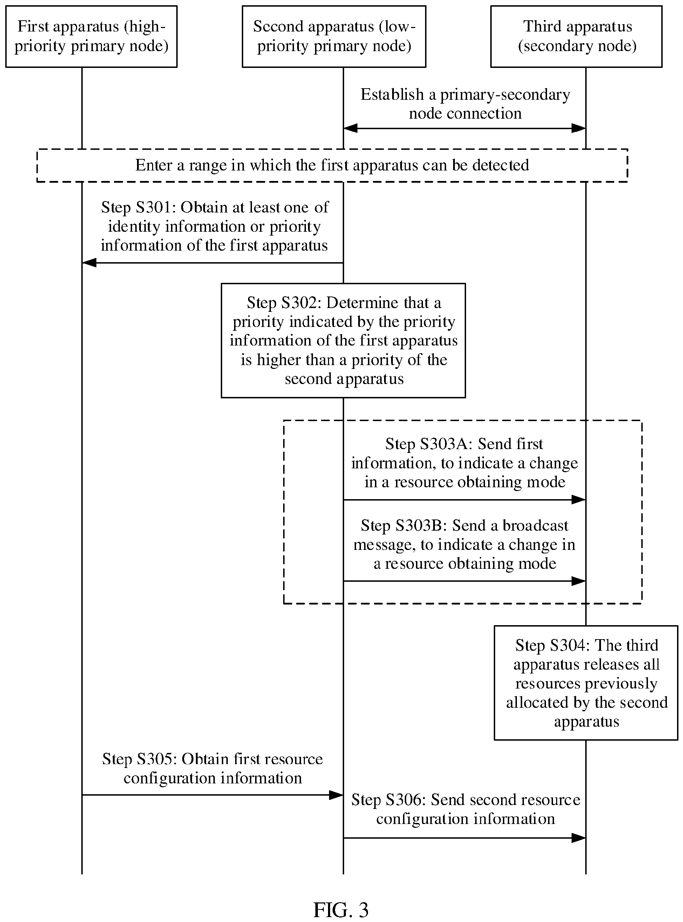

For a specific process description, refer to FIG. 3. For related descriptions of step S301 and step S302, refer to step S201 and step S202 in FIG. 2.

Step S303A: Send first information, to indicate a change in a resource obtaining mode of the third apparatus.

Specifically, after the second apparatus determines that the priority indicated by the priority information of the first apparatus is higher than the priority of the second apparatus, the second apparatus stops resource allocation performed by the second apparatus, and obeys resource allocation performed by the first apparatus. Because the second apparatus and the third apparatus are a primary-secondary communication pair, the secondary node (the third apparatus) connected to the second apparatus also needs to obey resource allocation performed by the first apparatus. In this case, the second apparatus sends the first message to the third apparatus. The first information is used to indicate a change in a resource obtaining mode of the third apparatus. In other words, the second apparatus no longer serves as a primary node of the third apparatus to allocate a resource to the third apparatus, and a resource of the third apparatus is not allocated by the second apparatus.

Optionally, the first information may include at least one of the identity information and the priority information of the first apparatus, and the first information carries a mode change indication to indicate a change in a resource obtaining mode of the third apparatus. Based on at least one of the identity information and the priority information of the first apparatus in the first information, the first information indicates the third apparatus to obey resource allocation performed by the first apparatus. The second apparatus replaces the secondary node (the third apparatus) of the second apparatus to apply for a resource from the first apparatus, and forwards the resource to the third apparatus.

Step S303B: Send a broadcast message, to indicate a change in a resource obtaining mode of the third apparatus.

Specifically, after the second apparatus determines that the priority indicated by the priority information of the first apparatus is higher than the priority of the second apparatus, the second apparatus stops resource allocation performed by the second apparatus, and obeys resource allocation performed by the first apparatus. Because the second apparatus and the third apparatus are a primary-secondary communication pair, the secondary node (the third apparatus) connected to the second apparatus also needs to obey resource allocation performed by the first apparatus. In this case, the second apparatus sends the broadcast message to the third apparatus, where the broadcast message is used to broadcast, to another device, a change in a resource obtaining mode of the secondary node of the second apparatus. After receiving the broadcast message, the third apparatus releases all resources previously allocated by the second apparatus.

Optionally, the broadcast message from the second apparatus may include identity information and priority information of the second apparatus. In other words, the second apparatus may serve as a primary node to connect to another device, but the second apparatus needs to apply to the first apparatus for a resource and forward the resource to the secondary node.

It should be noted that both steps S303A and S303B are optional steps, and an execution sequence is not limited.

Step S304: The third apparatus releases a connection resource between the third apparatus and the second apparatus.

Specifically, the third apparatus releases all resources previously allocated by the second apparatus, and re-obtains, from the second apparatus, resource allocation information allocated by the first apparatus.

It should be noted that step S304 is an optional step.

Step S305: Obtain first resource configuration information.

Specifically, the second apparatus obtains the first resource configuration information from the first apparatus, where the first resource configuration information is used to configure a second resource, and the second resource is used for communication between the first apparatus and the second apparatus. The first resource configuration information may be further used to configure a first resource, and the first resource is used for communication between the first apparatus and the third apparatus.

Optionally, the second apparatus sends, to the first apparatus, data information that indicates a secondary node connected to the second apparatus, where the data information includes a quantity of secondary nodes connected to the second apparatus, a device type of a secondary node, identifier information of a secondary node, a data volume of a secondary node, and the like. After receiving the data information, the first apparatus allocates a corresponding resource to each node, and sends the resources to the second apparatus.

It may be understood that, before the second apparatus obtains the first resource configuration information, the method further includes that the second apparatus successfully establishes a connection to the first apparatus.

Step S306: Send second resource configuration information.

Specifically, after receiving the first resource configuration information, the second apparatus sends the second resource configuration information to the third apparatus. The second resource configuration information is a resource allocated by the first apparatus to the third apparatus. The first resource configuration information is used to configure the second resource. In this case, a resource configured by using the second resource configuration information is a part of the second resource.

Optionally, after receiving the first resource configuration information, the second apparatus forwards or transparently transmits the first resource configuration information to the third apparatus. The first resource configuration information is used to configure the first resource, and the second apparatus directly forwards the first resource configuration information (the second resource configuration information is the same as the first resource configuration information).

In general, a core idea of Embodiment 2 is that, within a specified range, primary nodes with different priorities are allowed to simultaneously declare primary node identities; and after identifying a higher-priority primary node (the first apparatus), a low-priority primary node (the second apparatus) stops the resource allocation function of the low-priority primary node, and notifies a secondary node device (the third apparatus) connected to the low-priority primary node. Subsequently, the low-priority primary node replaces the secondary node to apply to the high-priority primary node for a resource, and sends the resource to the secondary node.

It may be understood that, when the secondary node (the third apparatus) and the low-priority primary node (the second apparatus) are moved out of a communication coverage area of the high-priority primary node (the first apparatus), the low-priority primary node (the second apparatus) cannot detect a higher-priority primary node. In this case, the low-priority primary node restores to a primary node identity, and the third apparatus continues to obey resource allocation performed by the second apparatus.

It should be noted that whether a node is within a communication range may depend on whether a received signal power is greater than a preset power threshold. When the received signal power is greater than the preset power threshold, it is considered that the node is within the communication range; or when the received signal power is not greater than the preset power threshold, it is considered that the node is not within the communication range.

Optionally, whether a node is within a communication range may alternatively depend on whether a communication rate is greater than a rate threshold. A principle is similar to that of the signal power. Details are not described herein again.

Embodiment 3: A secondary node (the third apparatus) determines a priority, stops obeying resource allocation performed by a low-priority primary node (the second apparatus), and obeys resource allocation performed by a high-priority primary node (the first apparatus, for example, a head unit).

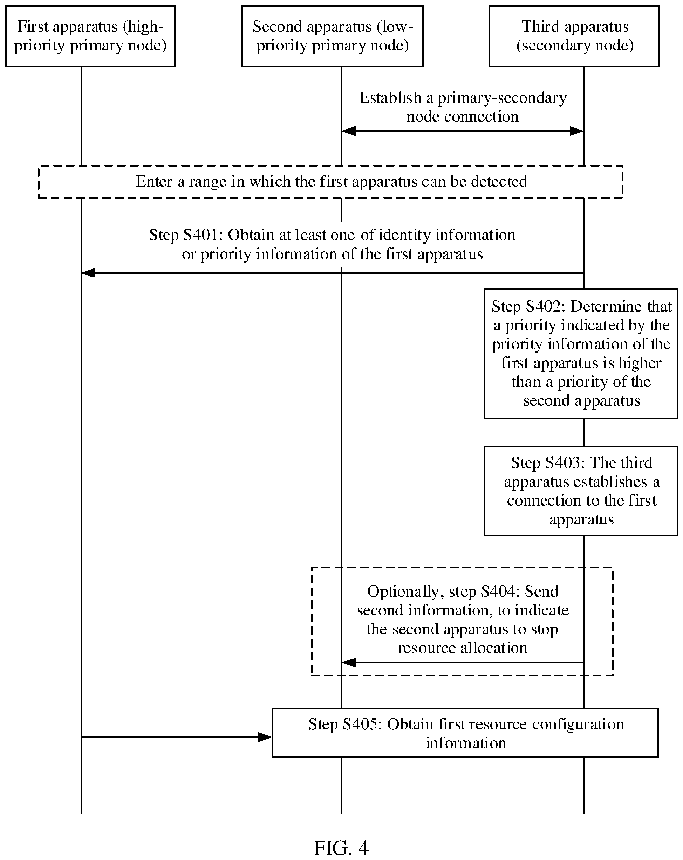

For a specific process description, refer to FIG. 4.

Step S401: Obtain at least one of the identity information and the priority information of the first apparatus.

Specifically, the first apparatus sends at least one of the identity information and the priority information of the first apparatus in a broadcast manner, and when the third apparatus enters a communication range of the first apparatus, the third apparatus obtains at least one of the identity information and the priority information of the first apparatus. The identity information of the first apparatus indicates that the first apparatus has a resource allocation function. In other words, the first apparatus may be used as a primary node. The identity information may indicate a device type (for example, a head unit, a mobile phone, or a portable terminal), or the identity information is an identifier that can identify the first apparatus as a primary node. It may be understood that resource allocation may alternatively be referred to as resource management or resource scheduling.

At least one of the identity information and the priority information of the first apparatus may be included in a broadcast message (for example, a system broadcast message) sent by the first apparatus, or may be included in radio resource control (Radio Resource Control, RRC) signaling. Alternatively, at least one of the identity information and the priority information of the first apparatus may be sent in a broadcast manner, or may be sent in a unicast or multicast manner.

Alternatively, at least one of the identity information and the priority information of the first apparatus may be carried in a physical signal sent by the first apparatus. For example, the physical signal may be a primary synchronization signal, different priority information may correspond to synchronization signals of different styles or patterns, and another apparatus may obtain or determine the priority information of the first apparatus by receiving a synchronization signal.

For example, the identity information may be indicated by using device identification code. Generally, the device identification code encodes a device according to a specific encoding rule. Different fields in the device identification code have different meanings, and the identity information of the device may be obtained by parsing some or all of the fields. For example, two bits in the device identification code may be used to indicate a device type. For example, 00 identifies a CDC, 01 identifies a mobile phone, and 10 indicates a wearable device. For another example, the identity information may alternatively be indicated by using one bit. In other words, 0 identifies a primary node (which has a resource allocation/scheduling function), and 1 identifies a secondary node (which only obeys scheduling of the primary node).

Optionally, the identity information may be indicated by using a media access layer address (Media Access Control Address, MAC address). This is similar to the case of the device identification code. Details are not described again.

Optionally, the priority information is used to indicate a resource allocation priority. A low-priority device is subject to resource allocation performed by a high-priority device. Alternatively, the priority information may be embodied as an access priority or a connection priority. In other words, another apparatus preferentially establishes a connection to a high-priority device, or initiates access to a high-priority device, and the high-priority device allocates resources in a centralized manner. For example, when facing connection requests sent by a plurality of devices, the another apparatus establishes a connection to a highest-priority device in the plurality of devices; or when the another apparatus initiates a connection request to the plurality of devices, a highest-priority device in the plurality of devices responds to the connection request to establish a connection. Alternatively, the another apparatus initiates a connection request to a highest-priority device in the plurality of devices.

Specifically, the priority information may be a level identifier, and indicate a priority of the first apparatus that serves as a primary node. For example, a CDC sends a first system broadcast message, where the message carries a first access priority indicator, 000 (a high access priority); and a mobile phone sends a second system broadcast message, where the message carries a second access priority indicator 001 (a low access priority). In this case, the another apparatus preferentially sends a connection establishment/access request to the CDC, and the CDC schedules resources for the another apparatus. In addition, the priority information may be agreed on according to a protocol. For example, in the protocol, it may be agreed on that a CDC device has a highest priority, the mobile phone has a low priority, and the like.

In a possible implementation, before the third apparatus obtains at least one of the identity information and the priority information of the first apparatus, the third apparatus first sends a connection request message in a broadcast manner. When the first apparatus enters a communication range of the third apparatus, the first apparatus responds to the connection request message sent by the third apparatus, and sends response information to the third apparatus, where the response information includes at least one of the identity information and the priority information of the first apparatus. The third apparatus obtains at least one of the identity information and the priority information of the first apparatus.

Specifically, the third apparatus may obtain at least one of the identity information and the priority information of the first apparatus by receiving a system broadcast message sent by the first apparatus.

In a possible implementation, the identity information of the first apparatus may indicate a resource allocation priority of the first apparatus. When obtaining the identity information of the first apparatus, the third apparatus may determine the resource allocation priority of the first apparatus based on the identity information. An apparatus applies, for a resource, to a device that has a higher resource allocation priority, and the device that has a higher resource allocation priority allocates and manages resources in a centralized manner.

Optionally, the identity information of the first apparatus may be priority information of a first device. In other words, when obtaining the identity information of the first apparatus, the third apparatus may determine a priority of the first apparatus based on the identity information, to determine whether to send a connection establishment request to the first apparatus, and whether to allow the first apparatus to schedule a resource for the third apparatus.

Step S402: Determine that a priority indicated by the priority information of the first apparatus is higher than a priority of the second apparatus.

Specifically, after obtaining at least one of the identity information and the priority information of the first apparatus, the third apparatus determines that the priority indicated by the priority information of the first apparatus is higher than the priority of the second apparatus.

Step S403: The third apparatus establishes a connection to the first apparatus.

Specifically, after determining that the priority indicated by the priority information of the first apparatus is higher than the priority of the second apparatus, the third apparatus establishes a connection to the first apparatus. In other words, the third apparatus obeys resource allocation performed by the first apparatus.

Optionally, the third apparatus releases the connection to the second apparatus. In other words, the second apparatus no longer serves as a primary node to allocate a resource to the third apparatus.

Optionally, releasing the connection to the second apparatus may not require receiving a response message from the second apparatus.

Step S404: Send second information, to indicate a second resource to stop resource allocation.

Specifically, because the second apparatus and the third apparatus are a primary-secondary communication pair, the second apparatus may send the second information to the third apparatus. The second information is used to indicate that the second apparatus no longer allocates a resource to the third apparatus. In other words, the second apparatus no longer serves as a primary node of the third apparatus.

Optionally, the second information may be a connection termination request message.

Optionally, the first information may include at least one of the identity information and the priority information of the first apparatus, and indicate the second apparatus to obey resource allocation performed by the first apparatus and to obtain resource allocation information from the first apparatus.

It should be noted that step S404 is an optional step.

Step S405: Obtain first resource configuration information.

Specifically, the third apparatus obtains the first resource configuration information from the first apparatus, where the first resource configuration information is used to configure a first resource, and the first resource is used for communication between the first apparatus and the third apparatus. The second apparatus obtains the first resource configuration information from the first apparatus, where the first resource configuration information is used to configure a second resource, and the second resource is used for communication between the first apparatus and the second apparatus. In other words, the second apparatus and the third apparatus each directly obtain the resource allocation information from the first apparatus. Communication data between the second apparatus and the third apparatus may be forwarded by the first apparatus, to complete data transmission.

It may be understood that, before the second apparatus obtains the first resource configuration information, the method further includes that the second apparatus successfully establishes a connection to the first apparatus.

In general, a core idea of Embodiment 3 is that, within a specified range, primary nodes with different priorities are allowed to simultaneously declare primary node identities; after identifying a higher-priority primary node (the first apparatus), a secondary node (the third apparatus) stops obeying resource allocation performed by a low-priority primary node (the second apparatus), and notifies the low-priority primary node. Subsequently, both the lower-priority primary node and the secondary node obey resource allocation performed by the higher-priority primary node.

It may be understood that, when the secondary node (the third apparatus) and the low-priority primary node (the second apparatus) are moved out of a communication coverage area of the high-priority primary node (the first apparatus), the secondary node (the third apparatus) cannot detect a higher-priority primary node. In this case, the second apparatus becomes a highest-priority primary node, and the third apparatus continues to obey resource allocation performed by the second apparatus.

In the foregoing three embodiments, a connection change and a resource allocation process are specifically implemented. A highest-priority device is determined based on priority information, to coordinate and allocate resources in a centralized manner, so that interference is avoided and service quality is ensured.

Next, an example in which the first apparatus is a primary node and the second apparatus is a secondary node is used to provide two connection manners of the first apparatus and the second apparatus.

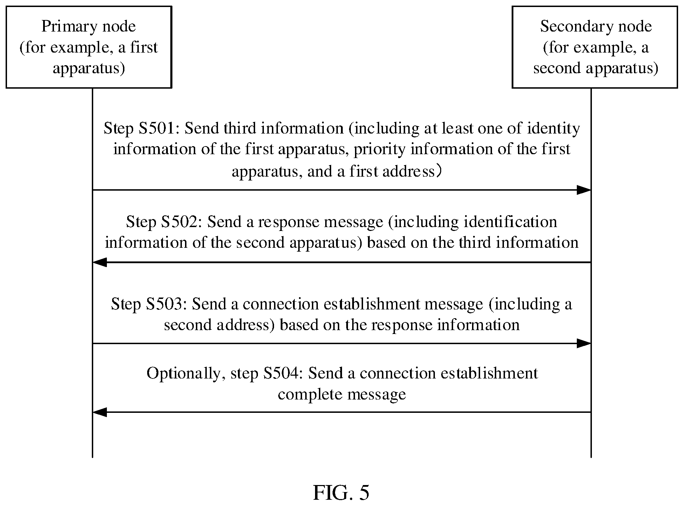

In a first manner, the first apparatus is used as an execution body, and the first apparatus actively initiates a connection request to connect to the second apparatus. As shown in FIG. 5, the method includes but is not limited to the following steps.

Step S501: The first apparatus sends third information.

Specifically, the first apparatus sends the third information, where the third information may be sent in a broadcast manner, a multicast manner, or the like. The third information is used to indicate the connection request of the first apparatus. The third information may include at least one of the identity information of the first apparatus, the priority information of the first apparatus, and a first address. The identity information of the first apparatus is used to represent that the first apparatus has a resource allocation function. The identity information may be specifically an apparatus type (for example, a CDC, a mobile phone, or a portable terminal) of the first apparatus, or may be another identifier that can represent that the first apparatus is a primary node. It may be understood that resource allocation may alternatively be referred to as resource management or resource scheduling.

Optionally, the first apparatus may periodically broadcast and send the third information on a broadcast channel, or may randomly select a resource on a broadcast channel to broadcast the third information. The identity information and the priority information may be preconfigured at delivery based on a device attribute.

Optionally, at least one of the identity information and the priority information of the first apparatus may be included in a broadcast message (for example, a system broadcast message) sent by the first apparatus, or may be included in radio resource control (Radio Resource Control, RRC) signaling. Alternatively, at least one of the identity information and the priority information of the first apparatus may be sent in a broadcast manner, or may be sent in a unicast or multicast manner.

Alternatively, at least one of the identity information and the priority information of the first apparatus may be carried in a physical signal sent by the first apparatus. For example, the physical signal may be a primary synchronization signal, different priority information may correspond to synchronization signals of different styles or patterns, and another apparatus may obtain or determine the priority information of the first apparatus by receiving a synchronization signal.

For example, the identity information may be indicated by using device identification code. Generally, the device identification code encodes a device according to a specific encoding rule. Different fields in the device identification code have different meanings, and the identity information of the device may be obtained by parsing some or all of the fields. For example, two bits in the device identification code may be used to indicate a device type. For example, 00 identifies a CDC, 01 identifies a mobile phone, and 10 indicates a wearable device. For another example, the identity information may alternatively be indicated by using one bit. In other words, 0 identifies a primary node (which has a resource allocation/scheduling function), and 1 identifies a secondary node (which only obeys scheduling of the primary node).

Optionally, the identity information may be indicated by using a media access layer address (Media Access Control Address, MAC address). This is similar to the case of the device identification code. Details are not described again.

Optionally, the priority information is used to indicate a resource allocation priority. A low-priority device is subject to resource allocation performed by a high-priority device. Alternatively, the priority information may be embodied as an access priority or a connection priority. In other words, another apparatus preferentially establishes a connection to a high-priority device, or initiates access to a high-priority device, and the high-priority device allocates resources in a centralized manner. For example, when facing connection requests sent by a plurality of devices, the another apparatus establishes a connection to a highest-priority device in the plurality of devices; or when the another apparatus initiates a connection request to the plurality of devices, a highest-priority device in the plurality of devices responds to the connection request to establish a connection. Alternatively, the another apparatus initiates a connection request to a highest-priority device in the plurality of devices.

Specifically, the priority information may be a level identifier, and indicate a priority of the first apparatus that serves as a primary node. For example, a CDC sends a first system broadcast message, where the message carries a first access priority indicator, 000 (a high access priority); and a mobile phone sends a second system broadcast message, where the message carries a second access priority indicator 001 (a low access priority). In this case, the another apparatus preferentially sends a connection establishment/access request to the CDC, and the CDC schedules resources for the another apparatus. In addition, the priority information may be agreed on according to a protocol. For example, in the protocol, it may be agreed on that a CDC device has a highest priority, the mobile phone has a low priority, and the like.

In a possible implementation, the identity information of the first apparatus may indicate a resource allocation priority of the first apparatus. When obtaining the identity information of the first apparatus, the second apparatus may determine the resource allocation priority of the first apparatus based on the identity information. An apparatus applies, for a resource, to a device that has a higher resource allocation priority, and the device that has a higher resource allocation priority allocates and manages resources in a centralized manner.

Optionally, the identity information of the first apparatus may be priority information of a first device. In other words, when obtaining the identity information of the first apparatus, the third apparatus may determine a priority of the first apparatus based on the identity information, to determine whether to send a connection establishment request to the first apparatus, and whether to allow the first apparatus to schedule a resource for the third apparatus.

In a possible implementation, the first address may indicate the resource allocation priority of the first apparatus. When obtaining the first address of the first apparatus, the second apparatus may determine the resource allocation priority of the first apparatus based on the first address. For example, the first address is information sent by a CDC. In this case, the second apparatus may learn, by using the first address, that the first apparatus has a resource allocation function and has a highest resource allocation priority.

Optionally, the first address is a media access layer address.

In a possible implementation, the third information may further include a device ID of the first apparatus. The device ID of the first apparatus may uniquely indicate the first apparatus, and may be, for example, a hardware address of the first apparatus. Another device may communicate with the first apparatus by using the device ID. The device ID may indicate the resource allocation priority of the first apparatus. When obtaining the device ID of the first apparatus, the second apparatus may determine the resource allocation priority of the first apparatus based on the device ID.

Step S502: The second apparatus sends a response message.

Specifically, after the first apparatus sends the third information, the second apparatus receives the third information. The second apparatus sends the response message to the first apparatus, where the response message includes identification information (for example, a device ID of the second apparatus) of the second apparatus.

Optionally, a triggering manner for the second apparatus to send the response message includes manual triggering and automatic triggering. The manual triggering includes manners such as tap, touch, voice, gesture, and floating touch. For example, the manual triggering may be as follows: When the second apparatus initially responds to the connection establishment request of the first apparatus, after receiving the third information sent by the first apparatus, the second apparatus sends a response message based on manual triggering of a user. The automatic triggering may be that after a connection is initially established between the second apparatus and the first apparatus, the second apparatus and the first apparatus store a device ID of each other or another identifier that can uniquely identify each other. Subsequently, when receiving the third information sent by the first apparatus again, the second apparatus identifies that an identifier of the first apparatus is the same as the stored identifier, and automatically sends a response message to the first apparatus based on the third information.

Step S503: The first apparatus sends connection establishment information.

Specifically, after receiving the response message from the second apparatus, the first apparatus sends a connection establishment message to the second apparatus. The connection establishment message includes a second address. The second address is an address allocated by the first apparatus to the second apparatus, and is used for communication between the first apparatus and the second apparatus, and a resource (for example, a time-frequency resource) allocated by the first apparatus to the second apparatus. The resource allocated by the first apparatus to the second apparatus may be a dynamically scheduled resource, or may be a semi-persistently scheduled resource.

Optionally, the second address is a short address allocated by the first apparatus. The second address is used in a process of communication between the first apparatus and the second apparatus, so that signaling overhead may be reduced, a data packet length is reduced, and resources are saved. Based on the second address, an implementable method includes: The first apparatus (a primary node) addresses the second apparatus (a secondary node) in a MAC PDU subheader, carries resource allocation information and communication data information, and sends the resource allocation information and communication data information to the second apparatus. Optionally, the short address may be a physical layer short address. A physical layer may filter received physical layer data based on the short address.

Step S504: The second apparatus sends a connection establishment complete message.

Specifically, after receiving the connection establishment message sent by the first apparatus, the second apparatus sends the connection establishment complete message to the first apparatus, to assist the first apparatus (a primary node) in determining whether the connection is successfully established. When receiving the connection establishment complete message, the first apparatus determines that a connection to the second apparatus is successfully established.

Optionally, when the first apparatus receives the connection establishment complete message before a preset time, it is determined that a connection to the second apparatus is successfully established. When the first apparatus does not receive the connection establishment complete message within a preset time, it is determined that establishment of the connection to the second apparatus fails, and a new connection may be re-initiated.

It should be noted that step S504 is an optional step.

In the method described in FIG. 5, the first apparatus actively sends the third information, and is connected to the second apparatus after obtaining a response from the second apparatus. Different from a conventional connection manner, to prevent the first apparatus and the second apparatus from generating a resource conflict with another device in a more complex communication environment, in this embodiment of this application, in a connection process, the first apparatus declares a primary node identity and a primary node priority of the first apparatus in the sent third information. A secondary node device (the second apparatus, including a headset, a wearable device, and the like) establishes a connection to a primary node device (the first apparatus), obtains resource allocation information from the primary node after the connection is established, and performs data transmission with the primary node. A connection is established based on device priority information, so that when a primary node and a secondary node access a complex environment, a high-priority device is enabled to schedule, manage, and control resources in a centralized manner, to resolve a problem of mutual interference between resources of a plurality of primary-secondary communication pairs.

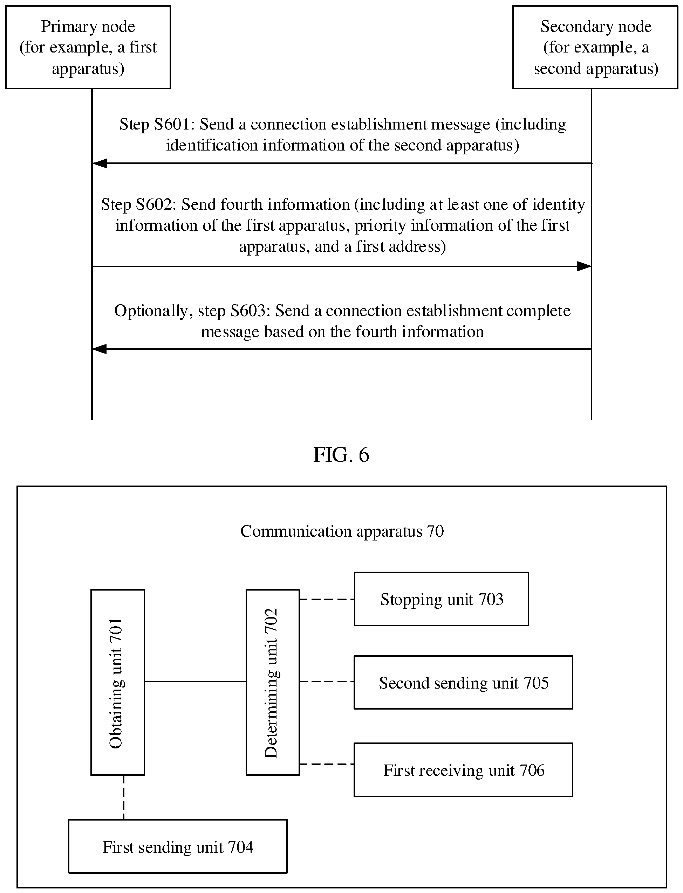

In a second manner, the second apparatus is used as an execution body, and the second apparatus actively initiates a connection request to connect to the first apparatus. As shown in FIG. 6, the method includes but is not limited to the following steps.

Step S601: The second apparatus sends a connection establishment message.

Specifically, the second apparatus sends the connection establishment message. The connection establishment message may be sent in a broadcast manner, a multicast manner, or the like. The connection establishment message includes identification information (for example, a device ID of the second apparatus) of the second apparatus, and information that a primary node identity is default, to indicate a connection request of the second apparatus.

Step S602: The first apparatus sends fourth information.

Specifically, when receiving the connection establishment message sent by the second apparatus, the first apparatus sends a fourth message to the second apparatus. The fourth information includes at least one of the identity information of the first apparatus, the first address, and the priority information of the first apparatus. The identity information of the first apparatus is used to represent that the first apparatus has a resource allocation function. The identity information may be specifically an apparatus type (for example, a CDC, a mobile phone, or a portable terminal) of the first apparatus, or may be another identifier that can represent that the first apparatus is a primary node. It may be understood that resource allocation may alternatively be referred to as resource management or resource scheduling.

A triggering manner for the first apparatus to send the fourth information includes manual triggering and automatic triggering. The manual triggering includes manners such as tap, touch, voice, gesture, and floating touch. For example, the manual triggering may be as follows: When a connection to the second apparatus is initially established, after receiving the connection establishment message sent by the second apparatus, the first apparatus sends the fourth information based on manual triggering of a user. The automatic triggering may be that after a connection is initially established between the second apparatus and the first apparatus, the second apparatus and the first apparatus store a device ID of each other or another identifier that can uniquely identify each other. Subsequently, when receiving the connection establishment message sent by the second apparatus again, the first apparatus identifies that an identifier of the second apparatus is the same as the stored identifier, and automatically sends the fourth information to the second apparatus based on the connection establishment message.

At least one of the identity information and the priority information of the first apparatus may be included in a broadcast message (for example, a system broadcast message) sent by the first apparatus, or may be included in radio resource control (Radio Resource Control, RRC) signaling. Alternatively, at least one of the identity information and the priority information of the first apparatus may be sent in a broadcast manner, or may be sent in a unicast or multicast manner.

Alternatively, at least one of the identity information and the priority information of the first apparatus may be carried in a physical signal sent by the first apparatus. For example, the physical signal may be a primary synchronization signal, different priority information may correspond to synchronization signals of different styles or patterns, and another apparatus may obtain or determine the priority information of the first apparatus by receiving a synchronization signal.

For example, the identity information may be indicated by using device identification code. Generally, the device identification code encodes a device according to a specific encoding rule. Different fields in the device identification code have different meanings, and the identity information of the device may be obtained by parsing some or all of the fields. For example, two bits in the device identification code may be used to indicate a device type. For example, 00 identifies a CDC, 01 identifies a mobile phone, and 10 indicates a wearable device. For another example, the identity information may alternatively be indicated by using one bit. In other words, 0 identifies a primary node (which has a resource allocation/scheduling function), and 1 identifies a secondary node (which only obeys scheduling of the primary node).

Optionally, the identity information may be indicated by using a media access layer address (Media Access Control Address, MAC address). This is similar to the case of the device identification code. Details are not described again.

Optionally, the priority information is used to indicate a resource allocation priority. A low-priority device is subject to resource allocation performed by a high-priority device. Alternatively, the priority information may be embodied as an access priority or a connection priority. In other words, another apparatus preferentially establishes a connection to a high-priority device, or initiates access to a high-priority device, and the high-priority device allocates resources in a centralized manner. For example, when facing connection requests sent by a plurality of devices, the another apparatus establishes a connection to a highest-priority device in the plurality of devices; or when the another apparatus initiates a connection request to the plurality of devices, a highest-priority device in the plurality of devices responds to the connection request to establish a connection. Alternatively, the another apparatus initiates a connection request to a highest-priority device in the plurality of devices.

Specifically, the priority information may be a level identifier, and indicate a priority of the first apparatus that serves as a primary node. For example, a CDC sends a first system broadcast message, where the message carries a first access priority indicator, 000 (a high access priority); and a mobile phone sends a second system broadcast message, where the message carries a second access priority indicator 001 (a low access priority). In this case, the another apparatus preferentially sends a connection establishment/access request to the CDC, and the CDC schedules resources for the another apparatus. In addition, the priority information may be agreed on according to a protocol. For example, in the protocol, it may be agreed on that a CDC device has a highest priority, the mobile phone has a low priority, and the like.

In a possible implementation, the identity information of the first apparatus may indicate a resource allocation priority of the first apparatus. When obtaining the identity information of the first apparatus, the second apparatus may determine the resource allocation priority of the first apparatus based on the identity information. An apparatus applies, for a resource, to a device that has a higher resource allocation priority, and the device that has a higher resource allocation priority allocates and manages resources in a centralized manner.

Optionally, the identity information of the first apparatus may be priority information of a first device. In other words, when obtaining the identity information of the first apparatus, the third apparatus may determine a priority of the first apparatus based on the identity information, to determine whether to send a connection establishment request to the first apparatus, and whether to allow the first apparatus to schedule a resource for the third apparatus.

In a possible implementation, the first address may indicate the resource allocation priority of the first apparatus. When obtaining the first address of the first apparatus, the second apparatus may determine the resource allocation priority of the first apparatus based on the first address. For example, the first address is information sent by a CDC. In this case, the second apparatus may learn, by using the first address, that the first apparatus has a resource allocation function and has a highest resource allocation priority.

Optionally, the first address is a media access layer address.

In a possible implementation, the fourth information may further include a second address. The second address is a short address allocated by the first apparatus to the second apparatus, and is used for communication between the first apparatus and the second apparatus and for subsequent resource allocation (for example, a time-frequency resource) performed by the first apparatus on the second apparatus. The second address is used in a process of communication between the first apparatus and the second apparatus, so that signaling overhead may be reduced, a data packet length is reduced, and resources are saved. Based on the second address, an implementable method includes: The first apparatus (a primary node) addresses the second apparatus (a secondary node) in a MAC PDU subheader, carries resource allocation information and communication data information, and sends the resource allocation information and communication data information to the second apparatus. Optionally, the short address may be a physical layer short address. A physical layer may filter received physical layer data based on the short address.

Optionally, the fourth information may further include the device ID of the first apparatus and the device ID of the second apparatus. The device ID of the first apparatus may uniquely indicate the first apparatus, and may be, for example, a hardware address of the first apparatus. The device ID of the second apparatus may uniquely indicate the second apparatus, and may be, for example, a hardware address of the second apparatus. The second apparatus may communicate with the first apparatus by using a hardware address.

Step S603: The second apparatus sends a connection establishment complete message.

Specifically, after receiving the fourth information sent by the first apparatus, the second apparatus sends the connection establishment complete message to the first apparatus, to assist the first apparatus (a primary node) in determining whether the connection is successfully established. When receiving the connection establishment complete message, the first apparatus determines that the connection to the second apparatus is successfully established.

Optionally, when the first apparatus receives the connection establishment complete message before a preset time, it is determined that the connection to the second apparatus is successfully established. When the first apparatus does not receive the connection establishment complete message within a preset time, it is determined that establishment of the connection to the second apparatus fails, and a new connection may be re-initiated.

It should be noted that step S603 is an optional step.

In the method described in FIG. 6, the second apparatus actively sends the connection establishment message. After receiving the connection establishment message, the first apparatus sends the fourth information to the second apparatus, to be connected to the second apparatus. Different from a conventional connection manner, to prevent the first apparatus and the second apparatus from generating a resource conflict with another device in a more complex communication environment, in this embodiment of this application, in a connection process, the first apparatus declares a primary node identity and a primary node priority of the first apparatus in the sent fourth information. A secondary node device (the second apparatus, including a headset, a wearable device, and the like) establishes a connection to a primary node device (the first apparatus), obtains resource allocation information from the primary node after the connection is established, configures a communication resource based on the resource allocation information, and performs data transmission with the primary node. A connection is established based on device priority information, so that when a primary node and a secondary node access a complex environment, a high-priority device is enabled to schedule, manage, and control resources in a centralized manner, to resolve a problem of mutual interference between resources of a plurality of primary-secondary communication pairs.

It may be understood that the foregoing provided two connection manners are two connection manners as examples. In actual application, a connection between two electronic devices is not limited to the foregoing two connection manners.

When the first apparatus (a high-priority primary node), the second apparatus (a low-priority primary node), and the third apparatus (a secondary node) simultaneously exist, the first apparatus and the second apparatus may simultaneously declare a primary node identity. The third apparatus establishes a connection to the first apparatus by comparing the priority information or the identity information of the first apparatus with that of the second apparatus.

Alternatively, when the first apparatus (a high-priority primary node), the second apparatus (a low-priority primary node), and the third apparatus (a secondary node) coexist, the second apparatus identifies existence of the first apparatus, and no longer declares a primary node identity of the second apparatus. The third apparatus receives the priority information or the identity information of the first apparatus, and establishes a connection to the first apparatus.

The foregoing describes in detail the method in embodiments of this application, and the following provides an apparatus in embodiments of this application.

FIG. 7 is a schematic diagram of a structure of a communication apparatus according to an embodiment of this application. The communication apparatus may include an obtaining unit 701 and a determining unit 702. Further, optionally, the communication apparatus may further include a stopping unit 703, a first sending unit 704, a second sending unit 705, and a first receiving unit 706. Detailed descriptions of the units are as follows:
the obtaining unit 701 is configured to obtain at least one of identity information and priority information of a first apparatus, where the identity information of the first apparatus indicates that the first apparatus has a resource allocation function;
the determining unit 702 is configured to determine that a priority indicated by the priority information of the first apparatus is higher than a priority of a second apparatus; and
the obtaining unit 701 is further configured to obtain first resource configuration information, where the first resource configuration information is used to configure a first resource, and the first resource is used for communication between the first apparatus and a third apparatus; or the first resource configuration information is used to configure a second resource, and the second resource is used for communication between the first apparatus and the second apparatus.

In a possible implementation, the priority information is used to indicate a resource allocation priority.

In a possible implementation, the identity information indicates a resource allocation priority of the first apparatus.

In a possible implementation, the apparatus further includes the stopping unit 703, configured to stop sending a broadcast message, where the broadcast message includes at least one of identity information and priority information of the second apparatus.

In a possible implementation, the apparatus further includes the first sending unit 704, configured to send first information to the third apparatus, where the first information is used to indicate that the second apparatus does not allocate a resource to the third apparatus, or the first information is used to indicate a change in a resource obtaining mode of the third apparatus.

In a possible implementation, a broadcast message from the second apparatus does not include the identity information or the priority information of the second apparatus; or the first information is used to indicate to terminate resource allocation to the third apparatus.

In a possible implementation, the first information includes at least one of the identity information and the priority information of the first apparatus; and/or the first information carries a mode change indication, and the mode change indication is used to indicate the third apparatus to obtain resource allocation information from the first apparatus.

In a possible implementation, the obtaining unit 701 is specifically configured to receive the first resource configuration information from the first apparatus.

In a possible implementation, the first sending unit 704 is further configured to: send second resource configuration information to the third apparatus, where a resource configured by using the second resource configuration information is a part of the second resource; or send the first resource configuration information to the third apparatus.

In a possible implementation, the apparatus further includes the second sending unit 705, configured to send second information to the second apparatus, where the second information is used to indicate to release a connection to the second apparatus.

In a possible implementation, the obtaining unit 701 is specifically configured to obtain the first resource configuration information from the first apparatus, where the first resource configuration information is used to configure the first resource, and the first resource is used for communication between the first apparatus and the third apparatus.

In a possible implementation, the apparatus further includes the first receiving unit 706, configured to receive first information from the second apparatus, where the first information is used to indicate that the second apparatus no longer allocates a resource to the third apparatus, or the second information is used to indicate a change in a resource obtaining mode of the third apparatus.

It should be noted that for implementation of each unit, correspondingly refer to corresponding descriptions of steps in the method embodiment shown in FIG. 2, FIG. 3, or FIG. 4. Details are not described herein again. In addition, the first sending unit and the second sending unit mentioned above may be merely a function-based logical distinction, and it is not limited that there are necessarily two independent sending units. In a specific implementation, there may be one sending unit, or there may be a plurality of sending units.

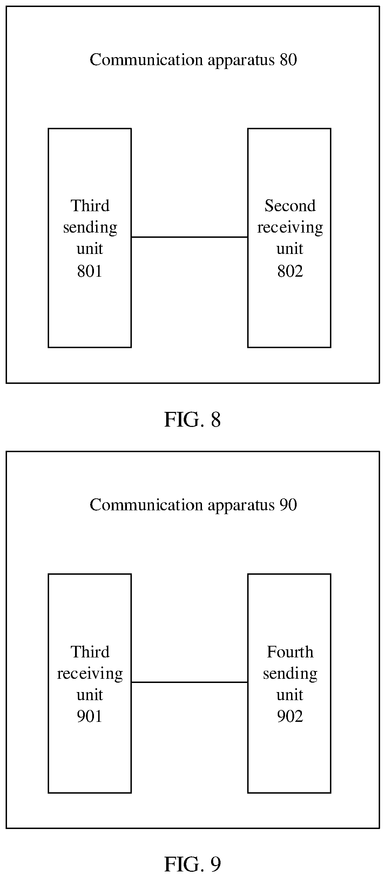

FIG. 8 is a schematic diagram of a structure of another communication apparatus according to an embodiment of this application. The communication apparatus may include a third sending unit 801 and a second receiving unit 802. Detailed descriptions of the units are as follows:
the third sending unit 801 is configured to send third information, where the third information includes at least one of identity information of a first apparatus, a first address, and priority information of the first apparatus, the identity information of the first apparatus indicates that the first apparatus has a resource allocation function, and the priority information is used to indicate a resource allocation priority; and
the second receiving unit 802 is configured to receive a response message from a second apparatus, where the response message includes identification information of the second apparatus.

In a possible implementation, the priority information is used to indicate a resource allocation priority.

In a possible implementation, the third sending unit 801 is further configured to send a connection establishment message to the second apparatus, where the connection establishment message includes a second address, and the second address is an address allocated by the first apparatus to the second apparatus.

It should be noted that for implementation of each unit, correspondingly refer to corresponding descriptions of steps in the method embodiment shown in FIG. 5. Details are not described herein again.

FIG. 9 is a schematic diagram of a structure of another communication apparatus according to an embodiment of this application. The communication apparatus may include a third receiving unit 901 and a fourth sending unit 902. Detailed descriptions of the units are as follows:
the third receiving unit 901 is configured to receive a connection establishment message, where the connection establishment message includes identification information of a second apparatus; and
the fourth sending unit 902 is configured to send fourth information based on the connection establishment message, where the fourth information includes at least one of identity information of a first apparatus, a first address, and priority information of the first apparatus, and the identity information of the first apparatus indicates that the first apparatus has a resource allocation function.

In a possible implementation, the priority information is used to indicate a resource allocation priority.

In a possible implementation, the fourth information further includes a second address, and the second address is an address allocated by the first apparatus to the second apparatus.

It should be noted that for implementation of each unit, correspondingly refer to corresponding descriptions of steps in the method embodiment shown in FIG. 6. Details are not described herein again.

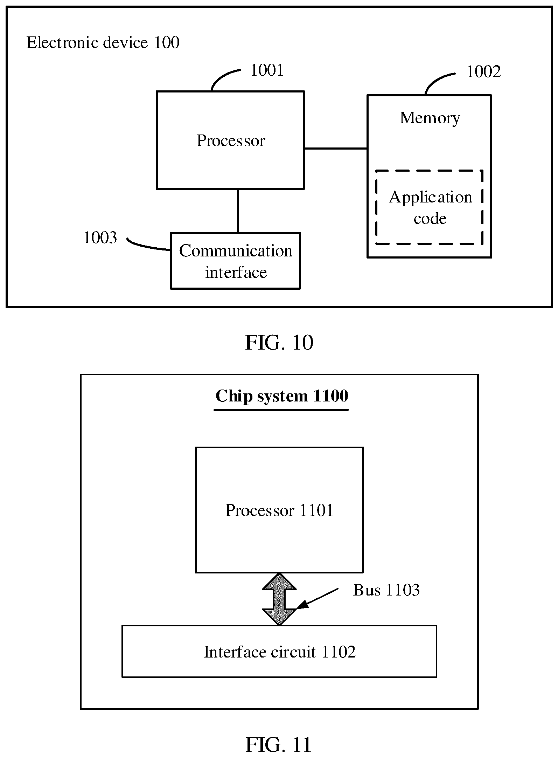

FIG. 10 is a schematic diagram of a structure of an electronic device according to an embodiment of this application. The electronic device 100 includes at least one processor 1001 and at least one communication interface 1003. Optionally, the electronic device 100 may further include at least one memory 1002. In addition, the device may further include a general-purpose component such as an antenna. Details are not described herein again.

The processor 1001 may be a general-purpose central processing unit (CPU), a microprocessor, an application-specific integrated circuit (application-specific integrated circuit, ASIC), or one or more integrated circuits configured to control program execution of the foregoing solution.

The electronic device includes the communication interface 1003. The communication interface is configured to communicate with another device or a communication network, such as the Ethernet, a radio access network (RAN), a core network, or a wireless local area network (Wireless Local Area Networks, WLAN).

When the electronic device includes the memory 1002, the memory may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (Electrically Erasable Programmable Read-Only Memory, EEPROM), a compact disc read-only memory (Compact Disc Read-Only Memory, CD-ROM), or another compact disc storage, an optical disc storage (including a compact disc, a laser disc, an optical disc, a digital versatile disc, a Blu-ray disc, and the like), a disk storage medium, or another magnetic storage device, or any other medium that can be used to carry or store expected program code in a form of instructions or a data structure and that can be accessed by a computer, but is not limited thereto. The memory may exist independently, and is connected to the processor by using a bus. Alternatively, the memory may be integrated with the processor.

The memory 1002 is configured to store application program code for executing the foregoing solution, and the processor 1001 controls the execution. The processor 1001 is configured to execute the application program code stored in the memory 1002.

The code stored in the memory 1002 may be used to execute the communication method provided in the foregoing FIG. 2 to FIG. 6. For example, the code is used to determine the priority indicated by the priority information of the first apparatus is greater than the priority of the second apparatus, and to obtain first resource configuration information, where the first resource configuration information is used to configure a first resource, and the first resource is used for communication between the first apparatus and a third apparatus, or the first resource configuration information is used to configure a second resource, and the second resource is used for communication between the first apparatus and the second apparatus.

The electronic device 100 may be the first apparatus, the second apparatus, or the third apparatus in the communication methods provided in FIG. 2 to FIG. 6, or may be a head unit, a central controller, or a control node in a vehicle.

Optionally, the electronic device 100 may be a chip or an integrated circuit.

Optionally, the electronic device 100 may be integrated into a vehicle-mounted central controller or an MDC controller.

It should be noted that, for functions of the functional units in the electronic device 100 described in this embodiment of this application, refer to related descriptions in the method embodiments in FIG. 2 to FIG. 6. Details are not described herein again.

An embodiment of this application further provides a vehicle, and the foregoing electronic device is disposed on the vehicle. Further, optionally, the vehicle includes the first apparatus.

As shown in FIG. 11, an embodiment of this application further provides a chip 1100, including one or more processors 1101 and an interface circuit 1102. Optionally, the chip 1100 may further include a bus 1103.

The processor 1101 may be an integrated circuit chip and has a signal processing capability. In an implementation process, the steps in the foregoing methods may be completed by using a hardware integrated logic circuit in the processor 1101, or by using instructions in a form of software. The processor 1101 may be a general-purpose processor, a digital signal processor (DSP), an application-specific integrated circuit (ASIC), a field programmable gate array (FPGA) or another programmable logic device, a discrete gate or transistor logic device, or a discrete hardware component. The processor may implement or perform the methods and the steps disclosed in embodiments of this application. The general-purpose processor may be a microprocessor, or the processor may be any conventional processor, or the like.

The interface circuit 1102 may send or receive data, instructions, or information. The processor 1101 may process the data, the instructions, or other information received through the interface circuit 1102, and may send processed information through the interface circuit 1102.

Optionally, the chip further includes a memory. The memory may include a read-only memory and a random access memory, and provide operation instructions and data to the processor. Apart of the memory may further include a non-volatile random access memory (NVRAM).

Optionally, the memory stores an executable software module or a data structure, and the processor may perform a corresponding operation by invoking operation instructions (the operation instructions may be stored in an operating system) stored in the memory.

Optionally, the chip may be used in the electronic device or the network device in embodiments of this application. Optionally, the interface circuit 1102 may be configured to output an execution result of the processor 1101. For the authentication method provided in one or more embodiments of this application, refer to the foregoing embodiments. Details are not described herein again.

It should be noted that functions corresponding to each of the processor 1101 and the interface circuit 1102 may be implemented by using a hardware design, or may be implemented by using a software design, or may be implemented by using a combination of software and hardware. This is not limited herein.

The foregoing mainly describes the solutions provided in embodiments of this application from a perspective of the method implemented by the electronic device. It may be understood that, to implement the foregoing functions, each network element such as the electronic device and the processor includes a corresponding hardware structure and/or software module for performing each function. A person skilled in the art should be easily aware that, with reference to the network elements and algorithm steps in the examples described in embodiments disclosed in this specification, this application may be implemented by hardware or a combination of hardware and computer software. Whether a function is performed by hardware or hardware driven by computer software depends on a particular application and a design constraint condition that are of the technical solutions. A person skilled in the art may use different methods to implement the described functions for each particular application, but it should not be considered that the implementation goes beyond the scope of this application.

In embodiments of this application, the electronic device, the camera device, and the like may be divided into function modules based on the foregoing method examples. For example, each function module may be obtained through division for each corresponding function, or two or more functions may be integrated into one processing module. The integrated module may be implemented in a form of hardware, or may be implemented in a form of a software function module. It should be noted that, in embodiments of this application, module division is an example, and is merely logical function division. In an actual implementation, another division manner may be used.

An embodiment of this application further provides a computer-readable storage medium. All or some of the processes in the foregoing method embodiments may be implemented by a computer program instructing related hardware. The program may be stored in the foregoing computer-storage medium. When the program is executed, the processes in the foregoing method embodiments may be performed. The computer-readable storage medium includes any medium that can store program code, such as a read-only memory (read-only memory, ROM), a random access memory (random access memory, RAM), a magnetic disk, or an optical disc.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the processes or the functions according to embodiments of this application are generated. The computer may be a general-purpose computer, a dedicated computer, a computer network, or another programmable apparatus. The computer instructions may be stored in a computer-readable storage medium, or may be transmitted through the computer-readable storage medium. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

A sequence of the steps of the method in embodiments of this application may be adjusted, combined, or deleted based on an actual requirement.

The modules in the apparatus in embodiments of this application may be combined, divided, and deleted based on an actual requirement.

In conclusion, the foregoing embodiments are merely intended for describing the technical solutions of this application, rather than limiting this application. Although this application is described in detail with reference to the foregoing embodiments, a person of ordinary skill in the art should understand that modifications may still be made to the technical solutions described in the foregoing embodiments, or equivalent replacements may still be made to some technical features thereof. These modifications or replacements do not make the essence of the corresponding technical solutions depart from the scope of the technical solutions of embodiments of this application.

## Claims

1. A communication method, wherein the method comprises:
obtaining at least one of identity information and priority information of a first apparatus, wherein the identity information of the first apparatus indicates that the first apparatus has a resource allocation function;
determining that a priority indicated by the priority information of the first apparatus is higher than a priority of a second apparatus; and
obtaining first resource configuration information, wherein the first resource configuration information is used to configure a first resource, and the first resource is used for communication between the first apparatus and a third apparatus; or the first resource configuration information is used to configure a second resource, and the second resource is used for communication between the first apparatus and the second apparatus.

2. The method according to claim 1, wherein the identity information indicates a resource allocation priority of the first apparatus.

3. The method according to claim 1, wherein after the determining that a priority indicated by the priority information of the first apparatus is higher than a priority of a second apparatus, the method further comprises:
stopping sending a broadcast message, wherein the broadcast message comprises at least one of identity information and priority information of the second apparatus.

4. The method according to any one of claims 1 to 3, wherein after the determining that a priority indicated by the priority information of the first apparatus is higher than a priority of a second apparatus, the method further comprises:
sending first information to the third apparatus, wherein the first information is used to indicate that the second apparatus does not allocate a resource to the third apparatus; or the first information is used to indicate a change in a resource obtaining mode of the third apparatus.

5. The method according to claim 4, wherein a broadcast message from the second apparatus does not comprise the identity information or the priority information of the second apparatus; or the first information is used to indicate to terminate resource allocation to the third apparatus.

6. The method according to claim 5, wherein the first information comprises at least one of the identity information and the priority information of the first apparatus; and/or the first information carries a mode change indication, and the mode change indication is used to indicate the third apparatus to obtain resource allocation information from the first apparatus.

7. The method according to any one of claims 4 to 6, wherein the obtaining first resource configuration information comprises:
receiving the first resource configuration information from the first apparatus.

8. The method according to any one of claims 4 to 7, wherein after the obtaining first resource configuration information, the method further comprises:
sending second resource configuration information to the third apparatus, wherein a resource configured by using the second resource configuration information is a part of the second resource; or
sending the first resource configuration information to the third apparatus.

9. The method according to any one of claims 1 to 3, wherein after the determining that a priority indicated by the priority information of the first apparatus is higher than a priority of a second apparatus, the method further comprises:
sending second information to the second apparatus, wherein the second information is used to indicate to release a connection to the second apparatus.

10. The method according to claim 9, wherein the obtaining first resource configuration information comprises:
obtaining the first resource configuration information from the first apparatus, wherein the first resource configuration information is used to configure the first resource, and the first resource is used for communication between the first apparatus and the third apparatus.

11. The method according to claim 9 or 10, wherein after the determining that a priority indicated by the priority information of the first apparatus is higher than a priority of a second apparatus, the method further comprises:
receiving first information from the second apparatus, wherein the first information is used to indicate that the second apparatus does not allocate a resource to the third apparatus; or the second information is used to indicate a change in a resource obtaining mode of the third apparatus.

12. A communication method, wherein the method comprises:
sending third information, wherein the third information comprises at least one of identity information of a first apparatus, a first address, and priority information of the first apparatus, and the identity information of the first apparatus indicates that the first apparatus has a resource allocation function; and
receiving a response message from a second apparatus, wherein the response message comprises identification information of the second apparatus.

13. The method according to claim 12, wherein after the receiving a response message from a second apparatus, the method further comprises:
sending a connection establishment message to the second apparatus, wherein the connection establishment message comprises a second address, and the second address is an address allocated by the first apparatus to the second apparatus.

14. A communication method, wherein the method comprises:
receiving a connection establishment message, wherein the connection establishment message comprises identification information of a second apparatus; and
sending fourth information based on the connection establishment message, wherein the fourth information comprises at least one of identity information of a first apparatus, a first address, and priority information of the first apparatus, and the identity information of the first apparatus indicates that the first apparatus has a resource allocation function.

15. The method according to claim 14, wherein the fourth information further comprises a second address, and the second address is an address allocated by the first apparatus to the second apparatus.

16. A communication apparatus, wherein the apparatus comprises:
an obtaining unit, configured to obtain at least one of identity information and priority information of a first apparatus, wherein the identity information of the first apparatus indicates that the first apparatus has a resource allocation function; and
a determining unit, configured to determine that a priority indicated by the priority information of the first apparatus is higher than a priority of a second apparatus; wherein
the obtaining unit is further configured to obtain first resource configuration information, wherein the first resource configuration information is used to configure a first resource, and the first resource is used for communication between the first apparatus and a third apparatus; or the first resource configuration information is used to configure a second resource, and the second resource is used for communication between the first apparatus and the second apparatus.

17. The apparatus according to claim 16, wherein the identity information indicates a resource allocation priority of the first apparatus.

18. The apparatus according to claim 16, wherein the apparatus further comprises:
a stopping unit, configured to: after the determining unit determines that the priority indicated by the priority information of the first apparatus is higher than the priority of the second apparatus, stop sending a broadcast message, wherein the broadcast message comprises at least one of identity information and priority information of the second apparatus.

19. The apparatus according to any one of claims 16 to 18, wherein the apparatus further comprises:
a first sending unit, configured to: after the determining unit determines that the priority indicated by the priority information of the first apparatus is higher than the priority of the second apparatus, send first information to the third apparatus, wherein the first information is used to indicate that the second apparatus does not allocate a resource to the third apparatus; or the first information is used to indicate a change in a resource obtaining mode of the third apparatus.

20. The apparatus according to claim 19, wherein a broadcast message from the second apparatus does not comprise the identity information or the priority information of the second apparatus; or the first information is used to indicate to terminate resource allocation to the third apparatus.

21. The apparatus according to claim 20, wherein the first information comprises at least one of the identity information and the priority information of the first apparatus; and/or the first information carries a mode change indication, and the mode change indication is used to indicate the third apparatus to obtain resource allocation information from the first apparatus.

22. The apparatus according to any one of claims 19 to 21, wherein the obtaining unit is specifically configured to receive the first resource configuration information from the first apparatus.

23. The apparatus according to any one of claims 19 to 22, wherein the first sending unit is further configured to: after the obtaining unit obtains the first resource configuration information, send second resource configuration information to the third apparatus, wherein a resource configured by using the second resource configuration information is a part of the second resource; or
send the first resource configuration information to the third apparatus.

24. The apparatus according to any one of claims 16 to 18, wherein the apparatus further comprises:
a second sending unit, configured to: after the determining unit determines that the priority indicated by the priority information of the first apparatus is higher than the priority of the second apparatus, send second information to the second apparatus, wherein the second information is used to indicate to release a connection to the second apparatus.

25. The apparatus according to claim 24, wherein the obtaining unit is specifically configured to obtain the first resource configuration information from the first apparatus, wherein the first resource configuration information is used to configure the first resource, and the first resource is used for communication between the first apparatus and the third apparatus.

26. The apparatus according to claim 24 or 25, wherein the apparatus further comprises:
a first receiving unit, configured to: after the determining unit determines that the priority indicated by the priority information of the first apparatus is higher than the priority of the second apparatus, receive first information from the second apparatus, wherein the first information is used to indicate that the second apparatus does not allocate a resource to the third apparatus; or the second information is used to indicate a change in a resource obtaining mode of the third apparatus.

27. A communication apparatus, wherein the apparatus comprises:
a third sending unit, configured to send third information, wherein the third information comprises at least one of identity information of a first apparatus, a first address, and priority information of the first apparatus, and the identity information of the first apparatus indicates that the first apparatus has a resource allocation function; and
a second receiving unit, configured to receive a response message from a second apparatus, wherein the response message comprises identification information of the second apparatus.

28. The apparatus according to claim 27, wherein the third sending unit is further configured to: after the second receiving unit receives the response message from the second apparatus, send a connection establishment message to the second apparatus, wherein the connection establishment message comprises a second address, and the second address is an address allocated by the first apparatus to the second apparatus.

29. A communication apparatus, wherein the apparatus comprises:
a third receiving unit, configured to receive a connection establishment message, wherein the connection establishment message comprises identification information of a second apparatus; and
a fourth sending unit, configured to send fourth information based on the connection establishment message, wherein the fourth information comprises at least one of identity information of a first apparatus, a first address, and priority information of the first apparatus, and the identity information of the first apparatus indicates that the first apparatus has a resource allocation function.

30. The apparatus according to claim 29, wherein the fourth information further comprises a second address, and the second address is an address allocated by the first apparatus to the second apparatus.

31. A communication apparatus, comprising at least one processor and a memory, wherein the memory is configured to store program code, and the at least one processor is configured to invoke the program code, so that the communication apparatus is enabled to implement the method according to any one of claims 1 to 15.

32. A computer-readable storage medium, comprising computer instructions, wherein when the computer instructions are run on an apparatus, the apparatus is enabled to perform the method according to any one of claims 1 to 15.

33. A chip, wherein the chip comprises at least one processor, a memory, and an interface circuit, the at least one memory stores instructions, and when the instructions are executed by the at least one processor, the method according to any one of claims 1 to 15 is implemented.
